# EUROPEAN PATENT SPECIFICATION

(11) **EP 1 797 946 B1**
(45) Date of publication and mention of the grant of the patent: **24.05.2017**
(21) Application number: 06256318.4
(22) Date of filing: 12.12.2006
(51) Int. Cl.: B01J 13/02

(54) **PROCESS FOR PREPARING A HIGH STABILITY MICROCAPSULE PRODUCT AND METHOD FOR USING SAME**
VERFAHREN ZUR HERSTELLUNG EINES HOCHSTABILEN MIKROKAPSELPRODUKTES UND VERWENDUNGSVERFAHREN DAFÜR
PROCÉDÉ POUR LA PRÉPARATION D'UNE MICROCAPSULE HAUTEMENT STABLE ET SON PROCÉDÉ D'UTILISATION

(30) Priority: 15.12.2005 US 304090; 17.10.2006 US 549998
(43) Date of publication of application: 20.06.2007
(60) Divisional application: 17166100.2
(73) Proprietor: International Flavors & Fragrances, Inc., New York, NY 10019 (US)
(72) Inventor: Lee, Kaiping, Morganville, NJ 07751 (US); Popplewell, Lewis Michael, Morganville, NJ 07751 (US); Anastasiou, Theodore James, Holmdel, NJ 07733 (US)
(74) Representative: Lawrence, John

(56) References cited:
- WO-A1-93/14865
- WO-A1-2004/024313
- US-A- 4 694 905
- US-A- 4 956 129
- US-A- 5 160 529
- US-A- 5 332 584
- US-A- 5 605 966
- US-A- 5 962 134
- US-A1- 2002 004 059
- US-A1- 2002 037 306
- US-A1- 2004 195 711
- US-A1- 2005 129 946

## Description

### Field of the Invention

The present invention relates to a process for preparing fragrances that are encapsulated with a polymeric material and provide enhanced retention of said fragrances The encapsulated fragrances are well suited for rinse-off and leave-on applications associated with personal care and cleaning products.

### Background of the Invention

Fragrance materials are used in numerous products to enhance the consumer's enjoyment of a product. Fragrance materials are added to consumer products such as laundry detergents, fabric softeners, soaps, detergents, personal care products, such as shampoos, body washes, deodorants and the like, as well as numerous other products.

In order to enhance the effectiveness of the fragrance materials for the user, various technologies have been employed to enhance the delivery of the fragrance materials at the desired time. One widely used technology is encapsulation of the fragrance material in a protective coating. Frequently the protective coating is a polymeric material. The polymeric material is used to protect the fragrance material from evaporation, reaction, oxidation or otherwise dissipating prior to use. A brief overview of polymeric encapsulated fragrance materials is disclosed in the following U.S. Patents: U.S. Patent No. 4,081,384 discloses a softener or anti-stat core coated by a polycondensate suitable for use in a fabric conditioner; U.S. Patent No. 5,112,688 discloses selected fragrance materials having the proper volatility to be coated by coacervation with micro particles in a wall that can be activated for use in fabric conditioning; U.S. Patent No. 5,145,842 discloses a solid core of a fatty alcohol, ester, or other solid plus a fragrance coated by an aminoplast shell; and U.S. Patent No. 6,248,703 discloses various agents including fragrance in an aminoplast shell that is included in an extruded bar soap.

It is obviously not desired that the encapsulated materials be released from the shell prematurely. Often, the capsule shell is somewhat permeable to the core contents when stored under certain conditions. This is particularly the case when many capsule types, such as those having aminoplast or cross-linked gelatin walls, are stored in aqueous bases, particularly those containing surfactants. In these cases, although the capsule shell is intact, the active material is diffused from the core over time in a leaching process. The overall leaching mechanism may be viewed as a diffusion process, with transfer occurring from the capsule core to the aqueous media, followed by transfer to or solubilization into the surfactant micelles or vesicles. With normal surfactant concentrations of between 1 and 50% in consumer products, as compared to active material levels of 0.3 to 1%, it is clear that the partitioning favors absorption by the surfactant over time.

There exists a need in the art to provide an aqueous microcapsule product with improved retention of active materials in consumer products, which augments the benefit of microcapsule technology for improved active material longevity. There is also a need in the art to provide a microcapsule product with improved cost-in-use performance so that consumer product companies can use less microcapsule product to obtain equal or better performance/benefit.

US2005/0129946 A1 discloses a microcapsule that is produced by dispersing a liquid organic dispersion in an aqueous medium to form a capsule particle in the aqueous medium, the liquid organic dispersion containing an acid group-containing resin, a colored particle and an organic solvent, and the capsule particle comprising a disperse system containing the liquid organic dispersion, and a wall encapsulating the disperse system, wherein the acid group of the resin has been at least partly neutralized with an alkanolamine. The wall comprises the resin, and the resin may be crosslinked or cured with a crosslinking agent.

US2004/0195711 A1 discloses a microcapsule encapsulating a disperse system that is produced by preparing a liquid organic dispersion containing a resin whose acid group has been neutralized, a coloured particle, and an organic solvent; dispersing the liquid organic dispersion in an aqueous medium to produce a capsule particle in the aqueous medium, the capsule particle comprising a disperse system in which the coloured particle is dispersed in the organic solvent, and a wall encapsulating the disperse system; and separating the capsule particle from the aqueous medium for dryness.

WO2004/024313 A1 discloses microcapsules made of a core which contains at least one rubber additive and of a shell made of a first polymer. At least one coating made of a second polymer, which differs from the first polymer, and/or of a low molecular inorganic or organic compound, is deposited on the surface of the microcapsules as sliding or wearing layer in order to reduce the static friction.

US5962134 discloses aminoplast and phenoplast particles which are obtained by providing an aqueous solution of such a resin having a water tolerance level, adding a particulate core-forming material in solid form, e.g. mineral particles or cured resin particles, as well as a mixture of water and a stabilizing agent, the amount of water being sufficient to exceed the water tolerance level of the aminoplast or phenoplast, and thus forming an emulsion or suspension of the resin coated particles in water, and advancing cure of the resin to form partially or fully cured resin coatings having a thickness preferably about 5-75 µm encapsulating the particulate core-forming material.

US5605966 discloses microcapsules which comprise a polymeric wall material and a polymeric core material which is suitable as a leveling agent for film formation by film-forming oligomers and polymers.

US4956129, US5332584 and US5160529 disclose processes for microencapsulation which comprises (a) providing an organic solution comprising said material and an etherified urea-formaldehyde prepolymer dissolved therein; (b) creating an emulsion of said organic solution in an continuous phase aqueous solution comprising water and a surfaceactive agent, wherein said emulsion comprises discrete droplets of said organic solution dispersed in said continuous phase aqueous solution, there being formed thereby an interface between the discrete droplets of organic solution and the surrounding continuous phase aqueous solution; and (c) causing in situ selfcondensation and curing of said ureaformaldehyde prepolymers in the organic phase of said discrete droplets adjacent to said interface by simultaneously heating said emulsion to a temperature between about 20 °C to about 100 °C, and adding to said emulsion an acidifying agent and maintaining said emulsion at a pH of between about 0 to about 4 for a sufficient period of time to allow substantial completion of in situ condensation of said resin prepolymers to convert the liquid droplets of said organic solution to capsules consisting of solid permeable polymer shells enclosing said liquid material.

WO93/14865 discloses a process for the reduction of the formaldehyde content of a formulation of amino resin microcapsules which comprises treating the microcapsule formulation with from about 0.03 wt. % to about 0.75 wt. % of ammonia.
US4694905 discloses coated particulate matter wherein the particles are individually coated with a cured combination of phenolic/furan resin or furan resin to form a precured resin coating on a proppant such as sand, thereby substantially improving the chemical resistance of the proppant over one having a straight phenolic precured coating.

US2002/0004059 A1 and US2002/0037306 A1 disclose microcapsules formed from an aminoplast shell wall and an encapsulated ingredient or ingredients enclosed within the wall in which the wall contains a base-cleavable ester moiety.

### Summary of the Invention

The invention in its various embodiments permits the preparation of an aqueous microcapsule product that is able to retain an enhanced amount of active material within the microcapsule core during storage in a product base and to deliver a higher level of active material contained therein at the desired time. We have discovered processes for preparing microcapsule products that possess enhanced retention of active materials in various product bases under specified temperature and time variables.

The present claimed invention provides a process for preparing a high stability microcapsule product which comprises curing at a temperature above 90°C a crosslinked network of polymers containing an active material which is a fragrance to provide a microcapsule product which is capable of retaining the fragrance in consumer products, the consumer products comprising surfactants, alcohols, volatile silicones and mixtures thereof, the process comprising the steps of:
- reacting polymers to form said crosslinked network of polymers;
- admixing said active material and an optional functional additive to the reactant mixture;
- encapsulating the active material with the crosslinked network of polymers to form a polymer encapsulated material;
- curing the polymer encapsulated material at a temperature greater than 90°C to provide a high stability microcapsule product,
wherein the heating profile to the target cure temperature of the crosslinked network of polymers containing the active material is linear with a heating rate of at least 2.0°C a minute, over a period of time less than sixty minutes,
and wherein said crosslinked network of polymers containing said active material is cured for a period of time longer than 1 hour.

Consumer products comprising the microcapsule product can be obtained in some embodiments of the process.

### Detailed Description of the Invention

Without wishing to be bound by theory, it is believed that the mechanism of leaching active material, such as a fragrance, from the microcapsule in an aqueous surfactant-containing base occurs in three steps. First, fragrance components dissolve into the water that hydrates the shell wall. Second, the dissolved fragrance diffuses through the shell wall into the bulk water phase. Third, the fragrance in the water phase is absorbed by the hydrophobic portions of the surfactant dispersed in the base, thus allowing leaching to continue.

Previously, it was known in the art to cure capsules at temperatures up to 85°C and more preferably up to 50°C. The capsules were not cured above these temperatures because there was no perceived advantage. Due to the nature of the polymers used to encapsulate the active materials and the volatile nature of the fragrance components, which would be compromised under increased curing temperatures, it would not be expected that increasing the curing temperature would provide capsules with improved retention capabilities. In the present claimed invention curing of the polymer encapsulated material is at a temperature greater than 90°C, to provide a high stability microcapsule product. In the engineering process of curing the capsules at temperatures over 90°C pressure vessels are used during the processing. According to the present invention the target cure temperature is reached with a linear heat profile. The high stability of the microcapsules of the present invention is unexpected since it was believed that the aqueous microcapsules would not be stable with increased heat.

Surprisingly, the crosslinked network of polymers containing active materials cured at high temperatures and for periods of time greater than one hour provide a microcapsule product capable of retaining a much wider range of active materials during storage, in consumer product bases that contain surfactants, alcohols, volatile silicones and mixtures thereof, than previously possible. For example, enhanced retention may be achieved with materials with lower clogP values.

In the present claimed invention curing of the polymer encapsulated material is at a temperature greater than 90°C, to provide a high stability microcapsule product. The retention capabilities of the microcapsule product are improved when the crosslinked network of polymers containing active materials are cured at temperatures above 90°C. In a more preferred embodiment the retention capabilities of microcapsule product are improved when the cure temperature is above 110°C. In a most preferred embodiment the retention capabilities of the microcapsule product are improved when the cure temperature is above 120°C.

In the present claimed invention the crosslinked network of polymers containing said active material is cured for a period of time longer than 1 hour. In a further embodiment the crosslinked network of polymers containing active materials may be cured for periods of time longer than two hours.

According to a further embodiment of the invention there is a direct relationship between higher cure temperature and less leaching of active material from the microcapsule.

Furthermore, higher performance of the microcapsules can be achieved by curing at a higher temperature for a longer time.

In the present claimed invention the heating profile to the target cure temperature of the crosslinked network of polymers containing the active material is linear with a heating rate of at least 2.0°C a minute, over a period of time less than sixty minutes, more preferably less than thirty minutes. In a more preferred embodiment, greater performance of the microcapsules can be achieved when the heating profile to the target cure temperature of the crosslinked network of polymers containing the active material is linear with a heating rate of at least 5.0°C a minute over a period of time less than sixty minutes, and more preferably less than thirty minutes.

In the present claimed invention the crosslinked network of polymers containing said active material is cured for a period of time longer than 1 hour. According the present invention, the target cure temperature is the minimum temperature in degrees Celsius at which the capsule comprising crosslinked network of polymers containing active materials may be cured for a period of minimal time period to retard leaching. The time period at the target cure temperature needed to retard leaching can be from at least up to two minutes to at least up to about 1 hour before the capsules are cooled. More preferably, the curing period of the capsule is at least up to about 2 hours and most preferably at least up to 3 hours.

In a preferred embodiment the microcapsule product retains greater than 40% of the encapsulated active material after a four week period in consumer products with a tendency to promote leaching of the active material out of the microcapsule product into the base. Such as those that are based on surfactants, alcohols, or volatile silicones can also leach active materials from capsules over time. In a more preferred embodiment the microcapsule product retains greater than 50% of the encapsulated active material after a four week period. In a most preferred embodiment the microcapsule product retains greater than 60% of the encapsulated active material. Retention capabilities may vary dependent on the formulation of the product base, such as the level of surfactant which may range from 1% to 50% as well as the nature of the encapsulated active material and storage temperature.

Leaching of active material, such as fragrance, occurs not only when stored in the consumer products but also when using detergents, fabric softener and other fabric care products during the wash and rinse cycle during washing. The microcapsules of the present invention also exhibit enhanced stability during the wash and rinse cycle.

The term high stability refers to the ability of a microcapsule product to retain active materials in bases that have a tendency to promote leaching of the active material out of the microcapsule product into the base.

As used herein stability of the products is measured at room temperature or above over a period of at least a week. More preferably the capsules of the present invention are allowed to be stored at 37°C for more than about two weeks and preferably more than about four weeks.

According to the invention we have surprisingly found a process for preparing a high stability aqueous microcapsule product containing a crosslinked network of polymers capable of retaining the active material in surfactant containing consumer products. There are tremendous benefits for producing a high stability microcapsules, such as a longer shelf life, more stability during transportation and importantly superior sensory performance.

It is believed that there exists a relationship between higher concentration of surfactants in the base of consumer products and an increased leaching effect of the encapsulated active materials out of the microcapsules and into the base. Bases that are primarily non-aqueous in nature, e.g., those that are based on alcohols, or volatile silicones can also leach active materials from capsules over time. Volatile silicones such as but not limited to cyclomethicone and are exemplified by SF1256 Cyclopentasiloxane, SF1257 Cyclopentasiloxane are trademarks of General Electric Company. Volatile silicones are in a number of personal care products, such as antiperspirants, deodorants, hair sprays, cleansing creams, skin creams, lotions and stick products, bath oils, suntan and shaving product, make-up and nail polishes. In these product types, the base solvent itself solubilizes the active material.

The final microcapsule product of the present invention generally contains greater than 10 weight percent % water, more preferably greater than 30 weight percent % water and most preferably greater than 50 weight percent % water. In a further embodiment the final microcapsule product may be spray dried according to the process described in commonly assigned United States Patent Application No. 11/240, 071. Furthermore, it is known in the art that the fragrance materials with lower logP or ClogP (these terms will be used interchangeably from this point forward) exhibit higher aqueous solubility. Thus, when these materials are in the core of a microcapsule with a hydrated wall which is placed in an aqueous consumer product, they will have a greater tendency to diffuse into the surfactant-containing base if the shell wall is permeable to the fragrance materials.

The active material suitable for use in the present disclosure can be a wide variety of materials in which one would want to deliver in a controlled-release manner onto the surfaces being treated with the present compositions or into the environment surrounding the surfaces. Non-limiting examples of active materials include perfumes, flavoring agents, fungicide, brighteners, antistatic agents, wrinkle control agents, fabric softener actives, hard surface cleaning actives, skin and/or hair conditioning agents, malodour counteractants, antimicrobial actives, UV protection agents, insect repellants, animal/vermin repellants, flame retardants, and the like.

In the invention, the active material is a fragrance, in which case the microcapsules containing fragrance provide a controlled-release scent onto the surface being treated or into the environment surrounding the surface. In this case, the fragrance can be comprised of a number of fragrance raw materials known in the art, such as essential oils, botanical extracts, synthetic fragrance materials, and the like.

In general, the active material is contained in the microcapsule at a level of from about 1% to about 99%, preferably from about 10% to about 95%, and more preferably from about 30% to about 90%, by weight of the total microcapsule. The weight of the total microcapsule particles includes the weight of the shell of the microcapsule plus the weight of the material inside the microcapsule.

Microcapsules containing an active material, preferably perfume, suitable for use in the present compositions are described in detail in, e.g., U.S. Pat. Nos. 3,888,689; 4,520,142; 5,126,061 and 5,591,146.

The fragrances suitable for use in this invention include without limitation, any combination of fragrance, essential oil, plant extract or mixture thereof that is compatible with, and capable of being encapsulated by a polymer.

Many types of fragrances can be employed in the present invention, the only limitation being the compatibility and ability to be encapsulated by the polymer being employed, and compatibility with the encapsulation process used. Suitable fragrances include but are not limited to fruits such as almond, apple, cherry, grape, pear, pineapple, orange, strawberry, raspberry; musk, flower scents such as lavender-like, rose-like, iris-like, and carnation-like. Other pleasant scents include herbal scents such as rosemary, thyme, and sage; and woodland scents derived from pine, spruce and other forest smells. Fragrances may also be derived from various oils, such as essential oils, or from plant materials such as peppermint, spearmint and the like. Other familiar and popular smells can also be employed such as baby powder, popcorn, pizza, cotton candy and the like in the present invention.

A list of suitable fragrances is provided in U.S. Patents 4,534,891, 5,112,688 and 5,145,842. Another source of suitable fragrances is found in Perfumes Cosmetics and Soaps, Second Edition, edited by W. A. Poucher, 1959. Among the fragrances provided in this treatise are acacia, cassie, chypre, cylamen, fern, gardenia, hawthorn, heliotrope, honeysuckle, hyacinth, jasmine, lilac, lily, magnolia, mimosa, narcissus, freshly-cut hay, orange blossom, orchids, reseda, sweet pea, trefle, tuberose, vanilla, violet, wallflower, and the like.

As disclosed in commonly assigned U.S. Application No. 10/983,142, the logP of many perfume ingredients has been reported, for example, the Ponoma92 database, available from Daylight Chemical Information Systems, Inc. (Daylight CIS) Irvine, California. The values are most conveniently calculated using ClogP program also available from Daylight CIS. The program also lists experimentally determined logP values when available from the Pomona database. The calculated logP (ClogP) is normally determined by the fragment approach on Hansch and Leo (A. Leo, in Comprehensive Medicinal Chemistry, Vol. 4, C. Hansch, P. G. Sammens, J.B. Taylor and C.A. Ransden, Editiors, p. 295 Pergamon Press, 1990). This approach is based upon the chemical structure of the fragrance ingredient and takes into account the numbers and types of atoms, the atom connectivity and chemical bonding. The ClogP values which are most reliable and widely used estimates for this physiochemical property can be used instead of the experimental LogP values useful in the present invention. Further information regarding ClogP and logP values can be found in U.S. Patent 5,500,138.

The following fragrance ingredients provided in Table I are among those suitable for inclusion within the microcapsule of the present invention:

**TABLE 1**

| **PERFUME INGREDIENTS** | **CLOGP** |
|---|---|
| Allyl amyl glycolate | 2.72 |
| Allyl cyclohexane propionate | 3.94 |
| Ambrettolide | 6.26 |
| iso-amyl acetate | 2.20 |
| Amyl benzoate | 3.42 |
| Amyl cinnamate | 3.77 |
| Amyl cinnamic aldehyde | 4.32 |
| Amyl cinnamic aldehyde dimethyl acetal | 4.03 |
| iso-amyl salicylate | 4.60 |
| Aurantiol (Trade name for Hydroxycitronellal-methylanthranilate) | 4.22 |
| Benzyl salicylate | 4.38 |
| Butyl cyclohexanone | 2.84 |
| para-tert-Butyl cyclohexyl acetate | 4.02 |
| iso-butyl quinoline | 4.19 |
| Iso-butyl thiazole | 2.94 |
| beta-Caryophyllene | 6.33 |
| Cadinene | 7.35 |
| Carvone | 2.27 |
| Cedrol | 4.53 |
| Cedryl acetate | 5.44 |
| Cedryl formate | 5.07 |
| Cinnamyl acetate | 2.39 |
| Cinnamyl cinnamate | 5.48 |
| Cyclohexyl salicylate | 5.27 |
| Cyclamen aldehyde | 3.68 |
| Cyclacet | 2.97 |
| Dihydro carvone | 2.41 |
| Dimethyl anth (USDEA) | 2.29 |
| Diphenyl methane | 4.06 |
| Diphenyl oxide | 4.24 |
| Dodecalactone | 4.36 |
| Iso E Super (Trade name for 1-(1,2,3,4,5,6,7,8-Octahydro-2,3,8,8-tetramethyl-2-naphthalenyl)-ethanone) | 3.46 |
| Ethylene brassylate | 4.55 |
| Ethyl-2-methyl butyrate | 2.11 |
| Ethyl amyl ketone | 2.46 |
| Ethyl cinnamate | 2.85 |
| Ethyl undecylenate | 4.89 |
| Exaltolide (Trade name for 15-Hydroxyentadecanloic acid, lactone) | 5.35 |
| Galaxolide (Trade name for 1,3,4,6,7,8-Hexahydro-4,6,6,7,8,8-hexamethylcyclopenta-gamma-2-benzopyran) | 5.48 |
| Geranyl anthranilate | 4.22 |
| Geranyl phenyl acetate | 5.23 |
| Hedione | 2.53 |
| Hexadecanolide | 6.81 |
| Hexenyl salicylate | 4.72 |
| Hexyl cinnamic aldehyde | 4.90 |
| Hexyl salicylate | 4.91 |
| alpha-Irone | 3.82 |
| Liffarome | 2.23 |
| Lilial (Trade name for para-tertiary-Butyl-alphamethyl hydrocinnamic aldehyde) | 3.86 |
| Linalyl benzoate | 5.23 |
| Lyral | 2.08 |
| Manzanate | 2.65 |
| Methyl caproate | 2.33 |
| Methyl dihydrojasmone | 4.84 |
| Gamma-n-Methyl ionone | 4.31 |
| Musk indanone | 5.46 |
| Musk tibetine | 3.83 |
| Oxahexadecanolide-10 | 4.34 |
| Oxahexadecanolide-11 | 4.34 |
| Patchouli alcohol | 4.53 |
| Phantolide (Trade name for 5-Acetyl-1,1,2,3,3,6-hexamethyl indan) | 5.98 |
| Phenyl ethyl benzoate | 4.21 |
| Phenylethylphenylacetate | 3.77 |
| Phenyl heptanol | 3.48 |
| Resetone | 2.59 |
| Alpha-Santalol | 3.80 |
| Styrallyl acetate | 2.05 |
| Thibetolide (Trade name for 15-Hydroxypentadecanoic acid, lactone) | 6.25 |
| Triplal | 2.34 |
| Delta-Undecalactone | 3.83 |
| Gamma-Undecalactone | 4.14 |
| Vetiveryl acetate | 4.88 |
| Ylangene | 6.27 |

According to one embodiment of the invention because of the improved stability of the high temperature cured microcapsules a wider range of clog P materials may be employed.

In one embodiment, the fragrance formulation of the present invention may have at least about 60 weight % of materials with ClogP greater than 2.0, preferably greater than about 80 weight % with a Clog P greater than 2.5 and more preferably greater than about 80 weight % of materials with ClogP greater than 3.0. In another embodiment, the high stability microcapsule product may also allow up to 100% retention of active material with logP equal to and less than 2 to be effectively encapsulated.

Those with skill in the art appreciate that fragrance formulations are frequently complex mixtures of many fragrance ingredients. A perfumer commonly has several thousand fragrance chemicals to work from. Those with skill in the art appreciate that the present invention may contain a single ingredient, but it is much more likely that the present invention will comprise at least eight or more fragrance chemicals, more likely to contain twelve or more and often twenty or more fragrance chemicals. The present invention also contemplates the use of complex fragrance formulations containing fifty or more fragrance chemicals, seventy five or more or even a hundred or more fragrance chemicals in a fragrance formulation.

The level of fragrance in the microcapsule product varies from about 5 to about 95 weight %, preferably from about 40 to about 95 weight % and most preferably from about 50 to about 90 weight %. In addition to the fragrance, other materials can be used in conjunction with the fragrance and are understood to be included.

The present active material compositions may further comprise one or more malodour counteractant at a level preferably less than about 70 weight %, more preferably less than about 50 weight % of the composition. The malodour counteractant composition serves to reduce or remove malodor from the surfaces or objects being treated with the present compositions. The malodour counteractant composition is preferably selected from uncomplexed cyclodextrin, odor blockers, reactive aldehydes, flavanoids, zeolites, activated carbon, and mixtures thereof. Compositions herein that comprise odor control agents can be used in methods to reduce or remove malodor from surfaces treated with the compositions.

Specific examples of malodour counteractant composition components useful in the aminoplast microencapsulates used in the composition and process of our invention are as follows: Malodour Counteractant Component Group I:
1-cyclohexylethan-1-yl butyrate;
1-cyclohexylethan-1-yl acetate;
1-cyclohexylethan-1-ol;
1-(4'-methylethyl)cyclohexylethan-1-yl propionate; and
2'-hydroxy-1'-ethyl(2-phenoxy)acetate
each of which compound is marketed under the trademark VEILEX by International Flavors & Fragrances Inc., New York, N.Y., U.S.A. Malodour Counteractant Component Group II, as disclosed in U.S. Patent 6,379,658:
β-naphthyl methyl ether;
β-naphthyl ketone;
benzyl acetone;
mixture of hexahydro-4,7-methanoinden-5-yl propionate and hexahydro-4,7-methanoinden-6-yl propionate;
4-(2,6,6-trimethyl-2-cyclohexen-1-yl)-3-methyl-3-buten-2-one;
3,7-dimethyl-2,6-nonadien-1-nitrile;
dodecahydro-3a,6,6,9a-tetramethylnaphtho(2,1-b)furan;
ethylene glycol cyclic ester of n-dodecanedioic acid;
1-cyclohexadecen-6-one;
1-cycloheptadecen-10-one; and
corn mint oil.

In addition to the fragrance materials in the present invention contemplates the incorporation of solvent materials into the microcapsule product. The solvent materials are hydrophobic materials that are miscible in the fragrance materials used in the present invention. The solvent materials serve to increase the compatibility of various active materials, increase the overall hydrophobicity of the blend, influence the vapor pressure of active materials, or serve to structure the blend. Suitable solvents are those having reasonable affinity for the fragrance chemicals and a ClogP greater than 2.5, preferably greater than 3.5 and most preferably greater that 5.5. Suitable solvent materials include, but are not limited to triglyceride oil, mono and diglycerides, mineral oil, silicone oil, diethyl phthalate, polyalpha olefins, castor oil and isopropyl myristate. In a preferred embodiment the solvent materials are combined with fragrance materials that have ClogP values as set forth above. It should be noted that selecting a solvent and fragrance with high affinity for each other will result in the most pronounced improvement in stability. Appropriate solvents may be selected from the following non-limiting list:
- Mono-, di- and tri-esters, and mixtures thereof, of fatty acids and glycerine. The fatty acid chain can range from C4-C26. Also, the fatty acid chain can have any level of unsaturation. For instance capric/caprylic triglyceride known as Neobee M5 (Stepan Corporation). Other suitable examples are the Capmul series by Abitec Corporation. For instance, Capmul MCM.
- Isopropyl myristate
- Fatty acid esters of polyglycerol oligomers:
   R2CO-[OCH₂-CH(OCOR1)-CH₂O-]n, where R1 and R2 can be H or C4-26 aliphatic chains, or mixtures thereof, and n ranges between 2 - 50, preferably 2-30.
- Nonionic fatty alcohol alkoxylates like the Neodol surfactants by BASF, the Dobanol surfactants by Shell Corporation or the BioSoft surfactants by Stepan. The alkoxy group being ethoxy, propoxy, butoxy, or mixtures thereof. In addition, these surfactants can be end-capped with methyl groups in order to increase their hydrophobicity.
- Di- and tri-fatty acid chain containing nonionic, anionic and cationic surfactants, and mixtures thereof.
- Fatty acid esters of polyethylene glycol, polypropylene glycol, and polybutylene glycol, or mixtures thereof.
- Polyalphaolefins such as the ExxonMobil PureSym™ PAO line
- Esters such as the ExxonMobil PureSyn™ Esters
- Mineral oil
- Silicone oils such polydimethyl siloxane and polydimethylcyclosiloxane
- Diethyl phthalate
- Di-isodecyl adipate

While no solvent is needed in the core, it is preferable that the level of solvent in the core of the microcapsule product should be greater than about 20 weight %, preferably greater than about 50 weight % and most preferably greater than about 75 weight %. In addition to the solvent it is preferred that higher ClogP fragrance materials are employed. It is preferred that greater than about 25 weight %, preferably greater than 50 weight % and more preferably greater than about 80 weight % of the fragrance chemicals have ClogP values of greater than about 2.0, preferably greater than about 3.0 and most preferably greater than about 3.5. Those with skill in the art will appreciate that many formulations can be created employing various solvents and fragrance chemicals. The use of high ClogP fragrance chemicals will require a lower level of hydrophobic solvent than fragrance chemicals with lower ClogP to achieve similar stability. As those with skill in the art will appreciate, in a highly preferred embodiment high ClogP fragrance chemicals and hydrophobic solvents comprise greater than about 80 weight %, preferably more than about 90 weight % and most preferably greater than 99 weight % of the fragrance composition.

A common feature of many encapsulation processes is that they require the fragrance material to be encapsulated to be dispersed in aqueous solutions of polymers, pre-condensates, surfactants, and the like prior to formation of the microcapsule walls.

In order to provide the highest fragrance impact from the fragrance encapsulated microcapsules deposited on the various substrates referenced above, it is preferred that materials with a high odor-activity be used. Materials with high odor-activity can be detected by sensory receptors at low concentrations in air, thus providing high fragrance perception from low levels of deposited microcapsules. This property must be balanced with the volatility as described above. Some of the principles mentioned above are disclosed in U.S. Patent No. 5,112,688.

Encapsulation of active materials such as fragrances is known in the art, see for example U.S. Patent Nos. 2,800,457, 3,870,542, 3,516,941, 3,415,758, 3,041,288, 5,112,688, 6,329,057, and 6,261,483. Another discussion of fragrance encapsulation is found in the Kirk-Othmer Encyclopedia.

Preferred encapsulating polymers include those formed from melamine-formaldehyde or urea-formaldehyde condensates, as well as similar types of aminoplasts. Additionally, microcapsules made via the simple or complex coacervation of gelatin are also preferred for use with the coating. Microcapsules having shell walls comprised of polyurethane, polyamide, polyolefin, polysaccaharide, protein, silicone, lipid, modified cellulose, gums, polyacrylate, polystyrene, and polyesters or combinations of these materials are also functional.

A representative process used for aminoplast encapsulation is disclosed in U.S. Patent No. 3,516,941 though it is recognized that many variations with regard to materials and process steps are possible. A representative process used for gelatin encapsulation is disclosed in U.S. Patent No, 2,800,457 though it is recognized that many variations with regard to materials and process steps are possible. Both of these processes are discussed in the context of fragrance encapsulation for use in consumer products in U.S. Patent Nos. 4,145,184 and 5,112,688 respectively.

According to one embodiment of the invention there is a direct relationship between higher cure temperature and less leaching of active material from the microcapsule.

Furthermore, higher performance of the microcapsules can be achieved by curing at a higher temperature for a longer time.

In a more preferred embodiment, greater performance of the microcapsules can be achieved when the crosslinked network of polymers containing the active material is cured at a heating heating rate of at least 2.0 °C per minute, more preferably greater than 5.0 °C per minute, even more preferably at least 8.0 °C a minute a minute and most preferably at least 10 °C a minute over a period of time less than about sixty minutes and more preferably for a period of time less than about thirty minutes.

The following heating methods may be used in practice of the present invention, conduction for example via oil, steam radiation via infrared, and microwave, convection via heated air, steam injection and other methods known by those skilled in the art.

Well known materials such as solvents, surfactants, emulsifiers, and the like can be used in addition to the polymers described throughout the invention to encapsulate the fragrance without departing from the scope of the present invention. It is understood that the term encapsulated is meant to mean that the fragrance is substantially covered in its entirety. Encapsulation can provide pore vacancies or interstitial openings depending on the encapsulation techniques employed. More preferably the entire active material portion of the present invention is encapsulated.

Fragrance capsules known in the art consists of a core of various ratios of fragrance and solvent materials, a wall or shell comprising a three-dimensional cross-linked network of an aminoplast resin, more specifically a substituted or un-substituted acrylic acid polymer or co-polymer cross-linked with a urea-formaldehyde pre-condensate or a melamine-formaldehyde pre-condensate.

Microcapsule formation using mechanisms similar to the foregoing mechanism, using (i) melamine-formaldehyde or urea-formaldehyde pre-condensates and (ii) polymers containing substituted vinyl monomeric units having proton-donating functional group moieties (e.g. sulfonic acid groups or carboxylic acid anhydride groups) bonded thereto is disclosed in U.S. Patent 4,406,816 (2-acrylamido-2-methyl-propane sulfonic acid groups), UK published Patent Application GB 2,062,570 A (styrene sulfonic acid groups) and UK published Patent Application GB 2,006,709 A (carboxylic acid anhydride groups).

The cross-linkable acrylic acid polymer or co-polymer microcapsule shell wall precursor has a plurality of carboxylic acid moieties, to wit: 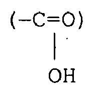 and is preferably one or a blend of the following:
(i) an acrylic acid polymer;
(ii) a methacrylic acid polymer;
(iii) an acrylic acid-methacrylic acid co-polymer;
(iv) an acrylamide-acrylic acid co-polymer;
(v) a methacrylamide-acrylic acid co-polymer;
(vi) an acrylamide-methacrylic acid co-polymer;
(vii) a methacrylamide-methacrylic acid co-polymer;
(viii) a C₁-C₄ alkyl acrylate-acrylic acid co-polymer;
(ix) a C₁-C₄ alkyl acrylate-methacrylic acid co-polymer;
(x) a C₁-C₄ alkyl methacrylate-acrylic acid co-polymer;
(xi) a C₁-C₄ alkyl methacrylate-methacrylic acid co-polymer;
(xii) a C₁-C₄ alkyl acrylate-acrylic acid-acrylamide co-polymer;
(xiii) a C₁-C₄ alkyl acrylate-methacrylic acid-acrylamide co-polymer;
(xiv) a C₁-C₄ alkyl methacrylate-acrylic acid-acrylamide co-polymer;
(xv) a C₁-C₄ alkyl methacrylate-methacrylic acid-acrylamide co-polymer;
(xvi) a C₁-C₄ alkyl acrylate-acrylic acid-methacrylamide co-polymer;
(xvii) a C₁-C₄ alkyl acrylate-methacrylic acid-methacrylamide co-polymer;
(xviii) a C₁-C₄ alkyl methacrylate-acrylic acid-methacrylamide co-polymer; and
(xix) a C₁-C₄ alkyl methacrylate-methacrylic acid-methacrylamide co-polymer;
and more preferably, an acrylic acid-acrylamide copolymer.

When substituted or un-substituted acrylic acid co-polymers are employed in the practice of our invention, in the case of using a co-polymer having two different monomeric units, e.g. acrylamide monomeric units and acrylic acid monomeric units, the mole ratio of the first monomeric unit to the second monomeric unit is in the range of from about 1:9 to about 9:1, preferably from about 3:7 to about 7:3. In the case of using a co-polymer having three different monomeric units, e.g. ethyl methacrylate, acrylic acid and acrylamide, the mole ratio of the first monomeric unit to the second monomeric unit to the third monomeric unit is in the range of 1:1:8 to about 8:8:1, preferably from about 3:3:7 to about 7:7:3.

The molecular weight range of the substituted or un-substituted acrylic acid polymers or co-polymers useful in the practice of our invention is from about 5,000 to about 1,000,000, preferably from about 10,000 to about 100,000. The substituted or un-substituted acrylic acid polymers or co-polymers useful in the practice of our invention may be branched, linear, star-shaped, dendritic-shaped or may be a block polymer or copolymer, or blends of any of the aforementioned polymers or copolymers.

Such substituted or un-substituted acrylic acid polymers or co-polymers may be prepared according to any processes known to those skilled in the art, for example, U.S. Patent 6,545,084.

The urea-formaldehyde and melamine-formaldehyde pre-condensate microcapsule shell wall precursors are prepared by means of reacting urea or melamine with formaldehyde where the mole ratio of melamine or urea to formaldehyde is in the range of from about 10:1 to about 1:6, preferably from about 1:2 to about 1:5 . For purposes of practicing our invention, the resulting material has a molecular weight in the range of from 156 to 3000. The resulting material may be used 'as-is' as a cross - linking agent for the aforementioned substituted or un-substituted acrylic acid polymer or copolymer or it may be further reacted with a C₁-C₆ alkanol, e.g. methanol, ethanol, 2-propanol, 3-propanol, 1-butanol , 1-pentanol or 1-hexanol, thereby forming a partial ether where the mole ratio of melamine or urea:formalhyde:alkanol is in the range of 1:(0.1 - 6):(0.1-6). The resulting ether moiety-containing product may by used 'as-is' as a cross-linking agent for the aforementioned substituted or un-substituted acrylic acid polymer or copolymer, or it may be self-condensed to form dimers, trimers and/or tetramers which may also be used as cross-linking agents for the aforementioned substituted or un-substituted acrylic acid polymers or co-polymers. Methods for formation of such melamine-formaldehyde and urea-formaldehyde pre-condensates are set forth in U.S. Patent 3,516,846, U.S. Patent 6,261,483, and Lee et al. J. Microencapsulation, 2002, Vol. 19, No. 5, pp 559-569, "Microencapsulation of fragrant oil via in situ polymerization: effects of pH and melamine-formaldehyde molar ratio". Examples of urea-formaldehyde pre-condensates useful in the practice of our invention are URAC 180 and URAC 186, trademarks of Cytec Technology Corp. of Wilmington, Delaware 19801, U.S.A. Examples of melamine-formaldehyde pre-condensates useful in the practice of our invention are CYMEL U-60, CYMEL U-64 and CYMEL U-65, trademarks of Cytec Technology Corp. of Wilmington, Delaware 19801, U.S.A. In the practice of our invention it is preferable to use as the precondensate for cross-linking the substituted or un-substituted acrylic acid polymer or co-polymer. The melamine-formaldehyde pre-condensate having the structure: 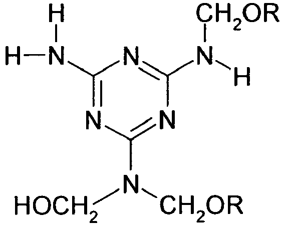 wherein each of the R groups are the same or different and each represents hydrogen or C₁-C₆ lower alkyl, e.g. methyl, ethyl, 1-propyl, 2-propyl, 1-butyl, 2-butyl, 2-methyl-1-propyl, 1-pentyl, 1-hexyl and/or 3-methyl-1-pentyl.

In practicing our invention, the range of mole ratios of urea-formaldehyde precondensate or melamine-formaldehyde pre-condensate: substituted or un-substituted acrylic acid polymer or co-polymer is in the range of from about 9:1 to about 1:9, preferably from about 5:1 to about 1:5 and most preferably from about 2:1 to about 1:2.

In another embodiment of the invention, microcapsules with polymer(s) comprising primary and/or secondary amine reactive groups or mixtures thereof and crosslinkers as disclosed in commonly assigned U.S. Patent Application No. 11/123,898.

The amine polymers can possess primary and/or secondary amine functionalities and can be of either natural or synthetic origin. Amine containing polymers of natural origin are typically proteins such as gelatin and albumen, as well as some polysaccharides. Synthetic amine polymers include various degrees of hydrolyzed polyvinyl formamides, polyvinylamines, polyallyl amines and other synthetic polymers with primary and secondary amine pendants. Examples of suitable amine polymers are the Lupamin series of polyvinyl formamides (available from BASF). The molecular weights of these materials can range from about 10,000 to about 1,000,000.

The polymers containing primary and/or secondary amines can be used with any of the following comonomers in any combination:
1. Vinyl and acrylic monomers with:
   a. alkyl, aryl and silyl substituents;
   b. OH, COOH, SH, aldehyde, trimonium, sulfonate, NH₂, NHR substiuents;
   c. vinyl pyridine, vinyl pyridine-N-oxide, vinyl pyrrolidon
2. Cationic monomers such as dialkyl dimethylammonium chloride, vinyl imidazolinium halides, methylated vinyl pyridine, cationic acrylamides and guanidine-based monomers
3. N-vinyl formamide
and any mixtures thereof. The ratio amine monomer/total monomer ranges from about 0.01 to about 0.99, more preferred from about 0.1 to about 0.9.

The following represents a general formula for the amine-containing polymer material: 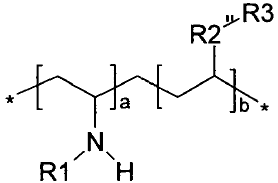 wherein R is a saturated or unsaturated alkane, dialkylsiloxy, dialkyloxy, aryl, alkylated aryl, and that may further contain a cyano, OH, COOH, NH₂, NHR, sulfonate, sulphate, -NH₂, quaternized amines, thiols, aldehyde, alkoxy, pyrrolidone, pyridine, imidazol, imidazolinium halide, guanidine, phosphate, monosaccharide, oligo or polysaccharide.

R1 is H, CH₃, (C=O)H, alkylene, alkylene with unsaturated C-C bonds, CH₂-CROH, (C=O) -NH-R, (C=O) - (CH₂) n-OH, (C=O) -R, (CH₂) n-E, -(CH2₋CH(C=O))n-XR, -(CH₂)n-COOH, -(CH₂)n-NH₂, -CH₂)n-(C=O)NH₂, E is an electrophilic group; wherein a and b are integers or average numbers (real numbers) from about 100-25,000.

R2 can be nonexistent or the functional group selected from the group consisting of -COO-, -(C=O)-, -O-, -S-, -NH-(C=O)-, - NR1-, dialkylsiloxy, dialkyloxy, phenylene, naphthalene, alkyleneoxy. R3 can be the same or selected from the same group as R1.

Additional copolymers with amine monomers are provided having the structure: 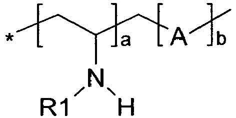 R1 is H, CH₃, (C=O)H, alkylene, alkylene with unsaturated C-C bonds, CH₂-CROH, (C=O)-NH-R, (C=O)-(CH₂)n-OH, (C=O)-R, (CH₂)n-E,-(CH₂-CH(C=O))n-XR, -(CH₂)n-COOH, -(CH₂)n-NH₂, -CH₂)n-(C=O)NH₂, E is an electrophilic group; wherein a and b are integers or average numbers (real numbers) from about 100-25,000; wherein R is a saturated or unsaturated alkane, dialkylsiloxy, dialkyloxy, aryl, alkylated aryl, and that may further contain a cyano, OH, COOH, NH₂, NHR, sulfonate, sulphate, -NH₂, quaternized amines, thiols, aldehyde, alkoxy, pyrrolidone, pyridine, imidazol, imidazolinium halide, guanidine, phosphate, monosaccharide, oligo or polysaccharide.

The comonomer, represented by A, can contain an amine monomer and a cyclic monomer wherein A can be selected from the group consisting of aminals, hydrolyzed or non-hydrolyzed maleic anhydride, vinyl pyrrolidine, vinyl pyridine, vinyl pyridine-N-oxide, methylated vinyl pyridine, vinyl naphthalene, vinyl naphthalene-sulfonate and mixtures thereof.

When A is an aminal the following general structure can represent the aminal: 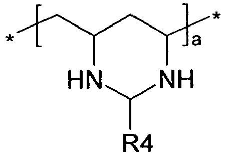 wherein R4 is selected from the group consisting of H, CH₃, (C=O)H, alkylene, alkylene with unsaturated C-C bonds, CH₂-CROH, (C=O)-NH-R, (C=O)-(CH₂)n-OH, (C=O)-R, (CH₂)n-E, -(CH₂-CH(C=O))n-XR, -(CH₂)n-COOH, -(CH₂)n-NH2, -CH₂)n-(C=O)NH₂, E is an electrophilic group; wherein R is a saturated or unsaturated alkane, dialkylsiloxy, dialkyloxy, aryl, alkylated aryl, and that may further contain a cyano, OH, COOH, NH₂, NHR, sulfonate, sulphate, -NH₂, quaternized amines, thiols, aldehyde, alkoxy, pyrrolidone, pyridine, imidazol, imidazolinium halide, guanidine, phosphate, monosaccharide, oligo or polysaccharide.

In addition instead of amine-containing polymers it is possible to utilize amine-generating polymers that can generate primary and secondary amines during the microcapsule formation process as disclosed in commonly assigned U.S. Patent Application No. 11/123,898.

The crosslinkers can be selected from the group consisting of aminoplasts, aldehydes such as formaldehyde and acetaldehyde, dialdehydes such as glutaraldehyde, epoxy, active oxygen such as ozone and OH radicals, poly-substituted carboxylic acids and derivatives such as acid chlorides, anyhydrides, isocyanates, diketones, halide-substituted, sulfonyl chloride-based organics, inorganic crosslinkers such as Ca²⁺, organics capable of forming azo, azoxy and hydrazo bonds, lactones and lactams, thionyl chloride, phosgene, tannin/tannic acid, polyphenols and mixtures thereof. Furthermore, processes such as free radical and radiation crosslinking can be used according to the present invention. Examples of free radical crosslinkers are benzoyl peroxide, sodium persulfate, azoisobutylnitrile (AIBN) and mixtures thereof.

With respect to the crosslinker, wall properties are influenced by two factors: the degree of crosslinking and the hydrophobic or hydrophilic nature of the crosslinker. The quantity and reactivity of the crosslinker determine the degree of crosslinking. The degree of crosslinking influences the microcapsule wall permeability by forming physical barriers towards diffusion. Walls made from crosslinkers possessing low-reactive groups will have smaller degrees of crosslinking than walls made from high-reactive crosslinkers. If a high degree of crosslinking is desired from a low-reactive crosslinker, more is added. If a low degree of crosslinking is desired from a high-reactive crosslinker then less is added. The nature and quantity of the crosslinker can also influence the hydrophobicity/ hydrophilicity of the wall. Some crosslinkers are more hydrophobic than others and these can be used to impart hydrophobic qualities to the wall, with the degree of hydrophobicity directly proportional to the quantity of crosslinker used.

Optimization of the degree of crosslinked network of the microcapsules can be reached by adjusting the amount of crosslinker used in combination with curing the microcapsules at temperatures above 90 °C.

The degree of crosslinking and degree of hydrophobicity can result from a single crosslinker or a combination of crosslinkers. A crosslinker that is highly reactive and hydrophobic can be used to create microcapsule walls with a high degree of crosslinking and a hydrophobic nature. Single crosslinkers that possess both these qualities are limited and thus crosslinker blends can be employed to exploit these combinations. Crosslinkers possessing high reactivities but low hydrophobicities can be used in combination with a low reactive, high hydrophobicity crosslinker to yield walls with high degrees of crosslinking and high hydrophobicity. Suitable crosslinkers are disclosed in commonly assigned U.S. Patent Application No. 11/123,898.
(A) Copolymers containing primary and/or secondary amine. When amine-containing polymers are employed in the practice of the invention, in the case of using a co-polymer having two different monomeric units, e.g. Lupamin 9030 (copolymer of vinyl amine and vinyl formamide), the mole ratio of the first monomeric unit to the second monomeric unit is in the range of from about 0.1:0.9 to about 0.9:0.1, preferably from about 1:9 to about 9:1. In the case of using a co-polymer having three different monomeric units, e.g. a copolymer of vinyl amine, vinyl formamide and acrylic acid, the mole ratio of the reactive monomer (i.e. vinyl amine + acrylic acid) in the total polymer ranging from 0.1:0.9, more preferably from 1:9.
(B) Branched amine containing polymers such as ethylene imines (Lupasol series of BASF) and ethoxylated ethylene imines.
(C) Mixtures of amine containing polymers and other polymers that contain other reactive groups such as COOH, OH, and SH.

The molecular weight range of the substituted or un-substituted amine-containing polymers or co-polymers and mixtures thereof, useful in the practice of our invention is from about 1,000 to about 1,000,000, preferably from about 10,000 to about 500,000. The substituted or un-substituted amine-containing polymers or co-polymers useful in the practice of our invention may be branched, linear, star-shaped, graft, ladder, comb/brush, dendritic-shaped or may be a block polymer or copolymer, or blends of any of the aforementioned polymers or copolymers. Alternatively, these polymers may also possess thermotropic and/or lyotropic liquid crystalline properties.

As disclosed in commonly assigned U.S. Application 10/720,524, particles comprised of fragrance and a variety of polymeric and non-polymeric matrixing materials are also suitable for use. These may be composed of polymers such as polyethylene, fats, waxes, or a variety of other suitable materials. Essentially any capsule, particle, or dispersed droplet may be used that is reasonably stable in the application and release of fragrance at an appropriate time once deposited.

Particle and microcapsule diameter can vary from about 10 nanometers to about 1000 microns, preferably from about 50 nanometers to about 100 microns and most preferably from about 1 to about 15 microns. The microcapsule distribution can be narrow, broad, or multi-modal. Each modal of the multi-modal distributions may be composed of different types of microcapsule chemistries.

Once the fragrance material is encapsulated a cationically charged water-soluble polymer may be applied to the fragrance encapsulated polymer. This water-soluble polymer can also be an amphoteric polymer with a ratio of cationic and anionic functionalities resulting in a net total charge of zero and positive, i.e., cationic. Those skilled in the art would appreciate that the charge of these polymers can be adjusted by changing the pH, depending on the product in which this technology is to be used. Any suitable method for coating the cationically charged materials onto the encapsulated fragrance materials can be used. The nature of suitable cationically charged polymers for assisted microcapsule delivery to interfaces depends on the compatibility with the microcapsule wall chemistry since there has to be some association to the microcapsule wall. This association can be through physical interactions, such as hydrogen bonding, ionic interactions, hydrophobic interactions, electron transfer interactions or, alternatively, the polymer coating could be chemically (covalently) grafted to the microcapsule or particle surface. Chemical modification of the microcapsule or particle surface is another way to optimize anchoring of the polymer coating to microcapsule or particle surface. Furthermore, the microcapsule and the polymer need to want to go to the desired interface and, therefore, need to be compatible with the chemistry (polarity, for instance) of that interface. Therefore, depending on which microcapsule chemistry and interface (e.g., cotton, polyester, hair, skin, wool) is used the cationic polymer can be selected from one or more polymers with an overall zero (amphoteric: mixture of cationic and anionic functional groups) or net positive charge, based on the following polymer backbones: polysaccharides, polypeptides, polycarbonates, polyesters, polyolefinic (vinyl, acrylic, acrylamide, poly diene), polyester, polyether, polyurethane, polyoxazoline, polyamine, silicone, polyphosphazine, olyaromatic, poly heterocyclic, or polyionene, with molecular weight (MW) ranging from about 1,000 to about 1000,000,000, preferably from about 5,000 to about 10,000,000. As used herein molecular weight is provided as weight average molecular weight. Optionally, these cationic polymers can be used in combination with nonionic and anionic polymers and surfactants, possibly through coacervate formation.

A more detailed list of cationic polymers that can be used to is provided below:
Polysaccharides include but are not limited to guar, alginates, starch, xanthan, chitosan, cellulose, dextrans, arabic gum, carrageenan, hyaluronates. These polysaccharides can be employed with:
   (a) cationic modification and alkoxy-cationic modifications, such as cationic hydroxyethyl, cationic hydroxy propyl. For example, cationic reagents of choice are 3-chloro-2-hydroxypropyl trimethylammonium chloride or its epoxy version. Another example is graft-copolymers of polyDADMAC on cellulose like in Celquat L-200 (Polyquaternium-4), Polyquaternium-10 and Polyquaternium-24, commercially available from National Starch, Bridgewater, N.J.;
   (b) aldehyde, carboxyl, succinate, acetate, alkyl, amide, sulfonate, ethoxy, propoxy, butoxy, and combinations of these functionalities. Any combination of Amylose and Mylopectin and overall molecular weight of the polysaccharide; and
   (c) any hydrophobic modification (compared to the polarity of the polysaccharide backbone).

The above modifications described in (a), (b) and (c) can be in any ratio and the degree of functionalization up to complete substitution of all functionalizable groups, and as long as the theoretical net charge of the polymer is zero (mixture of cationic and anionic functional groups) or preferably positive. Furthermore, up to 5 different types of functional groups may be attached to the polysaccharides. Also, polymer graft chains may be differently modified than the backbone. The counterions can be any halide ion or organic counter ion. As disclosed in U.S. Letter for Patent Nos. 6,297,203 and U.S. 6,200,554.

Another source of cationic polymers contain protonatable amine groups so that the overall net charge is zero (amphoteric: mixture of cationic and anionic functional groups) or positive. The pH during use will determine the overall net charge of the polymer. Examples are silk protein, zein, gelatin, keratin, collagen and any polypeptide, such as polylysine.

Further cationic polymers include poly vinyl polymers, with up to 5 different types of monomers, having the monomer generic formula -C(R2)(R1)-CR2R3-. Any co-monomer from the types listed in this specification may also be used. The overall polymer will have a net theoretical positive charge or equal to zero (mixture of cationic and anionic functional groups). Where R1 is any alkanes from C1-C25 or H; the number of double bonds ranges from 0-5. Furthermore, R1 can be an alkoxylated fatty alcohol with any alkoxy carbon-length, number of alkoxy groups and C1-C25 alkyl chain length. R1 can also be a liquid crystalline moiety that can render the polymer thermotropic liquid crystalline properties, or the alkanes selected can result in side-chain melting. In the above formula R2 is H or CH₃; and R3 is -C1, -NH₂ (i.e., poly vinyl amine or its copolymers with N-vinyl formamide. These are sold under the name Lupamin 9095 by BASF Corporation), -NHR1, -NR1R2, -NR1R2 R6 (where R6 = R1, R2, or -CH2-COOH or its salt), -NH-C(O)-H, -C(O)-NH₂ (amide), -C(O)-N(R2)(R2')(R2"), -OH, styrene sulfonate, pyridine, pyridine-N-oxide, quaternized pyridine, imidazolinium halide, imidazolium halide, imidazol, piperidine, pyrrolidone, alkyl-substituted pyrrolidone, caprolactam or pyridine, phenyl-R4 or naphthalene-R5 where R4 and R5 are R1, R2, R3, sulfonic acid or its alkali salt -COOH, -COO- alkali salt, ethoxy sulphate or any other organic counter ion. Any mixture or these R3 groups may be used. Further suitable cationic polymers containing hydroxy alkyl vinyl amine units, as disclosed in U.S. Patent No 6,057,404.

Another class of materials is polyacrylates, with up to 5 different types of monomers, having the monomer generic formula: -CH(R1)-C(R2)(CO-R3-R4)-. Any co-monomer from the types listed in this specification may also be used. The overall polymer will have a net theoretical positive charge or equal to zero (mixture of cationic and anionic functional groups). In the above formula R1 is any alkane from C1-C25 or H with number of double bonds from 0-5,aromatic moieties, polysiloxane, or mixtures thereof. Furthermore, R1 can be an alkoxylated fatty alcohol with any alkoxy carbon-length, number of alkoxy groups and C1-C25 alkyl chain length. R1 can also be a liquid crystalline moiety that can render the polymer thermotropic liquid crystalline properties, or the alkanes selected can result in side-chain melting. R2 is H or CH₃; R3 is alkyl alcohol C1-25 or an alkylene oxide with any number of double bonds, or R3 may be absent such that the C=O bond is (via the C-atom) directly connected to R4. R4 can be: -NH2, NHR1, -NR1R2, -NR1R2 R6 (where R6 = R1, R2, or-CH₂-COOH or its salt)., -NH-C(O)-, sulfo betaine, betaine, polyethylene oxide, poly(ethyleneoxide/propylene oxide/butylene oxide) grafts with any end group, H, OH, styrene sulfonate, pyridine, quaternized pyridine, alkyl-substituted pyrrolidone or pyridine, pyridine-N-oxide, imidazolinium halide, imidazolium halide, imidazol, piperidine, -OR1, -OH, -COOH alkali salt, sulfonate, ethoxy sulphate, pyrrolidone, caprolactam, phenyl-R4 or naphthalene-R5 where R4 and R5 are R1, R2, R3, sulfonic acid or its alkali salt or organic counter ion. Any mixture or these R3 groups may be used. Also, glyoxylated cationic polyacrylamides can be used. Typical polymers of choice are those containing the cationic monomer dimethylaminoethyl methacrylate (DMAEMA) or methacrylamidopropyl trimethyl ammonium chloride (MAPTAC). DMAEMA can be found in Gafquat and Gaffix VC-713 polymers from ISP. MAPTAC can be found in BASF's Luviquat PQ11 PN and ISP's Gafquat HS100.

Another group of polymers that can be used are those that contain cationic groups in the main chain or backbone. Included in this group are:
(1) polyalkylene imines such as polyethylene imine, commercially available as Lupasol from BASF. Any molecular weight and any degree of crosslinking of this polymer can be used in the present invention;
(2) ionenes having the general formula set forth as -[ N(+)R1R2-A1-N(R5)-X-N(R6)-A2-N(+)R3R4-A3 ]n- 2Z-, as disclosed in U.S. Patent Nos. 4,395,541 and U.S. 4,597,962;
(3) adipic acid/dimethyl amino hydroxypropyl diethylene triamine copolymers, such as Cartaretin F-4 and F-23, commercially available from Sandoz;
(4) polymers of the general formula- [N(CH₃)₂-(CH₂)×-NH-(CO)-NH-(CH₂)y-N(CH₃)₂)-(CH₂)z-O-(CH₂)p]n-, with x, y, z, p=1-12, and n according to the molecular weight requirements. Examples are Polyquaternium 2 (Mirapol A-15), Polyquaternium-17 (Mirapol AD-1), and Polyquaternium-18 (Mirapol AZ-1).

Other polymers include cationic polysiloxanes and cationic polysiloxanes with carbon-based grafts with a net theoretical positive charge or equal to zero (mixture of cationic and anionic functional groups). This includes cationic end-group functionalized silicones (i.e. Polyquaternium-80). Silicones with general structure: -[-Si(R1)(R2)-O-]x-[Si(R3)(R2)-O-]y-where R1 is any alkane from C1-C25 or H with number of double bonds from 0-5,aromatic moieties, polysiloxane grafts, or mixtures thereof. R1 can also be a liquid crystalline moiety that can render the polymer thermotropic liquid crystalline properties, or the alkanes selected can result in side-chain melting. R2 can be H or CH3 and R3 can be -R1-R4, where R4 can be -NH₂, -NHR1, -NR1R2, -NR1R2R6 (where R6 = R1, R2, or -CH₂-COOH or its salt), -NH-C(O)-, -COOH, -COO- alkali salt, any C1-25 alcohol, -C(O)-NH₂ (amide), -C(O)-N(R2)(R2')(R2"), sulfo betaine, betaine, polyethylene oxide, poly(ethyleneoxide/propylene oxide/butylene oxide) grafts with any end group, H, -OH, styrene sulfonate, pyridine, quaternized pyridine, alkyl-substituted pyrrolidone or pyridine, pyridine-N-oxide, imidazolinium halide, imidazolium halide, imidazol, piperidine, pyrrolidone, caprolactam, -COOH, -COO- alkali salt, sulfonate, ethoxy sulphate phenyl-R5 or naphthalene-R6 where R5 and R6 are R1, R2, R3, sulfonic acid or its alkali salt or organic counter ion. R3 can also be -(CH₂)x-O-CH₂-CH(OH)-CH₂-N(CH₃)₂-CH₂-COOH and its salts. Any mixture of these R3 groups can be selected. X and y can be varied as long as the theoretical net charge of the polymer is zero (amphoteric) or positive. In addition, polysiloxanes containing up to 5 different types of monomeric units may be used. Examples of suitable polysiloxanes are found in U.S. Patent Nos. 4,395,541 4,597,962 and U.S. 6,200,554. Another group of polymers that can be used to improve microcapsule/particle deposition are phospholipids that are modified with cationic polysiloxanes. Examples of these polymers are found in U.S. Patent No. 5,849,313, WO Patent Application 9518096A1 and European Patent EP0737183B1.

Furthermore, copolymers of silicones and polysaccharides and proteins can be used (commercially available as CRODASONE brand products).

Another class of polymers include polyethylene oxide-co-propyleneoxide-co-butylene oxide polymers of any ethylene oxide/propylene oxide / butylene oxide ratio with cationic groups resulting in a net theoretical positive charge or equal to zero (amphoteric). The general structure is: 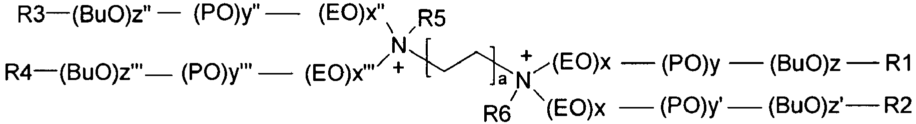 where R1,2,3,4 is -NH2, -N(R)3- X+, R with R being H or any alkyl group. R5, 6 is -CH3 or H. The value for 'a' can range from 1-100. Counter ions can be any halide ion or organic counter ion. X, Y, may be any integer, any distribution with an average and a standard deviation and all 12 can be different. Examples of such polymers are the commercially available TETRONIC brand polymers.

Suitable polyheterocyclic (the different molecules appearing in the backbone) polymers include the piperazine-alkylene main chain copolymers disclosed in Ind. Eng. Chem. Fundam., (1986), 25, pp.120-125, by Isamu Kashiki and Akira Suzuki.

Also suitable for use in the present invention are copolymers containing monomers with cationic charge in the primary polymer chain. Up to 5 different types of monomers may be used. Any co-monomer from the types listed in this specification may also be used. Examples of such polymers are poly diallyl dimethyl ammonium halides (PolyDADMAC) copolymers of DADMAC with vinyl pyrrolidone, acrylamides, imidazoles, imidazolinium halides, etc. These polymers are disclosed in Henkel EP0327927A2 and PCT Patent Application 01/62376A1. Also suitable are Polyquaternium-6 (Merquat 100), Polyquaternium-7 (Merquats S, 550, and 2200), Polyquaternium-22 (Merquats 280 and 295) and Polyquaternium-39 (Merquat Plus 3330), available from Ondeo Nalco.

Polymers containing non-nitrogen cationic monomers of the general type -CH2-C(R1)(R2-R3-R4)- can be used with: R1 being a -H or C1-C20 hydrocarbon. R2 is a disubstituted benzene ring or an ester, ether, or amide linkage. R3 is a C1-C20 hydrocarbon, preferably C1-C10, more preferably C1-C4. R4 can be a trialkyl phosphonium, dialkyl sulfonium, or a benzopyrilium group, each with a halide counter ion. Alkyl groups for R4 are C1-C20 hydrocarbon, most preferably methyl and t-butyl. These monomers can be copolymerized with up to 5 different types of monomers. Any co-monomer from the types listed in this specification may also be used.

Substantivity of these polymers may be further improved through formulation with cationic, amphoteric and nonionic surfactants and emulsifiers, or by coacervate formation between surfactants and polymers or between different polymers. Combinations of polymeric systems (including those mentioned previously) may be used for this purpose as well as those disclosed in EP1995/000400185.

Furthermore, polymerization of the monomers listed above into a block, graft or star (with various arms) polymers can often increase the substantivity toward various surfaces. The monomers in the various blocks, graft and arms can be selected from the various polymer classes listed in this specification and the sources below:
Encyclopedia of Polymers and Thickeners for Cosmetics, Robert Lochhead and William From, in Cosmetics & Toiletries, Vol. 108, May 1993, pp. 95-138;
Modified Starches: Properties & Uses, O. B. Wurzburg, CRC Press, 1986. Specifically, Chapters 3, 8, and 10;
U.S. Patent Nos. 6,190,678 and 6,200,554; and
PCT Patent Application WO 01/62376A1 assigned to Henkel.

Polymers, or mixtures of the following polymers:
(a) Polymers comprising reaction products between polyamines and (chloromethyl) oxirane or (bromomethyl) oxirane. Polyamines being 2(R1)N-[-R2-N(R1)-]n-R2-N(R1)2, 2HN-R1-NH2, 2HN-R2-N(R1)2 and 1H-Imidazole. Also, the polyamine can be melamine. R1 in the polyamine being H or methyl. R2 being alkylene groups of C1-C20 or phenylene groups. Examples of such polymers are known under the CAS numbers 67953-56-4 and 68797-57-9. The ratio of (chloromethyl) oxirane to polyamine in the cationic polymer ranges from 0.05-0.95.
(b) Polymers comprising reaction products of alkanedioic acids, polyamines and (chloromethyl) oxirane or (bromomethyl) oxirane. Alkane groups in alkanedioic acids C0-C20. Polyamine structures are as mentioned in (a). Additional reagents for the polymer are dimethyl amine, aziridine and polyalkylene oxide (of any molecular weight but, at least, di-hydroxy terminated; alkylene group being C1-20, preferably C2-4). The polyalkylene oxide polymers that can also be used are the Tetronics series. Examples of polymers mentioned here are known under the CAS numbers 68583-79-9 (additional reagent being dimethyl amine), 96387-48-3 (additional reagent being urea), and 167678-45-7 (additional reagents being polyethylene oxide and aziridine). These reagents can be used in any ratio.
(c) Polyamido Amine and Polyaminoamide-epichlorohydrin resins, as described by David Devore and Stephen Fisher in Tappi Journal, vol.76, No.8, pp. 121-128 (1993). Also referenced herein is "Polyamide-polyamine-epichlorohydrin resins" by W. W. Moyer and R. A. Stagg in Wet-Strength in Paper and Paperboard, Tappi Monograph Series No. 29, Tappi Press (1965), Ch.3, 33-37.

The preferred cationically charged materials comprise reaction products of polyamines and (chloromethyl) oxirane. In particular, reaction products of 1H-imidazole and (chloromethyl) oxirane, known under CAS number 68797-57-9. Also preferred are polymers comprising reaction products of 1,6-hexanediamine,N-(6-aminohexyl) and (chloromethyl) oxirane, known under CAS number 67953-56-4. The preferred weight ratio of the imidazole polymer and the hexanediamine, amino hexyl polymer is from about 5:95 to about 95:5 weight percent and preferably from about 25:75 to about 75:25.

The level of outer cationic polymer is from about 1% to about 3000%, preferably from about 5% to about 1000% and most preferably from about 10% to about 500% of the fragrance containing compositions, based on a ratio with the fragrance on a dry basis.

The weight ratio of the encapsulating polymer to fragrance is from about 1:25 to about 1:1. Preferred products have had the weight ratio of the encapsulating polymer to fragrance varying from about 1:10 to about 4:96.

For example, if a microcapsule blend has 20 weight % fragrance and 20 weight % polymer, the polymer ratio would be (20/20) multiplied by 100 (%) = 100%.

According to one embodiment of the invention optional function additives may be added to the capsule slurry. The following additives may be included:
- Optionally, non-confined unencapsulated active material from about 0.01 weight % to about 50 weight %, more preferably from about 5 weight % to about 40 weight %
- Optionally, capsule deposition aid (i.e. cationic starches such as Hi-CAT CWS42, cationic guars such as Jaguar C-162, cationic amino resins, cationic urea resins, hydrophobic quaternary amines, etc.) from about 0.01 weight % to about 25 weight %, more preferably from about 5 weight % to about 20 weight %.
- Optionally, emulsifier (i.e. nonionic such as polyoxyethylene sorbitan monostearate (Tween 60), anionic such as sodium oleate, zwitterionic such as lecithins) from about 0.01 weight % to about 25 weight %, more preferably from about 5 weight % to about 10 weight %.
- Optionally, humectant (i.e. polyhydric alcohols such as glycerin, propylene glycol, maltitol, alkoxylated nonionic polymers such as polyethylene glycols, polypropylene glycols, etc.) from about 0.01 weight % to about 25 weight %, more preferably from about 1 weight % to about 5 weight %.
- Optionally, viscosity control agent (suspending agent) which may be polymeric or colloidal (i.e. modified cellulose polymers such as methylcellulose, hydoxyethylcellulose, hydrophobically modified hydroxyethylcellulose, cross-linked acrylate polymers such as Carbomer, hydrophobically modified polyethers, etc.) from about 0.01 weight % to about 25 weight %, more preferably from about 0.5 weight % to about 10 weight %.
- Optionally, silicas which may be hydrophobic (i.e. silanol surface treated with halogen silanes, alkoxysilanes, silazanes, siloxanes, etc. such as Sipernat D17, Aerosil R972 and R974 (available from Degussa), etc.) and/or hydrophilic such as Aerosil 200, Sipernat 22S, Sipernat 50S, (available from Degussa), Syloid 244 (available from Grace Davison), etc. from about 0.01 weight % to about 20 weight %, more preferable from 0.5 weight % to about 5 weight %.

Further suitable humectants and viscosity control/ suspending agents are disclosed in U.S. Patent Nos. 4,428,869, 4,464,271, 4,446,032, and 6,930,078. Details of hydrophobic silicas as a functional delivery vehicle of active materials other than a free flow/anticaking agent are disclosed in U.S. Patent Nos. 5,500,223 and 6,608,017.

According to the present invention, the encapsulated fragrance is well suited for a variety of applications, including wash-off products. Wash-off products are understood to be those products that are applied for a given period of time and then are removed. These products are common in areas such as laundry products, and include detergents, fabric conditioners, and the like; as well as personal care products which include shampoos, conditioner, hair colors and dyes, hair rinses, body washes, soaps and the like.

As described herein, the present invention is well suited for use in a variety of well-known consumer products such as laundry detergent and fabric softeners, liquid dish detergents, automatic dish detergents, as well as hair shampoos and conditioners. These products employ surfactant and emulsifying systems that are well known. For example, fabric softener systems are described in U.S. Patents 6,335,315, 5,674,832, 5,759,990, 5,877,145, 5,574,179; 5,562,849, 5,545,350, 5,545,340, 5,411,671, 5,403,499, 5,288,417, and 4,767,547, 4,424,134. Liquid dish detergents are described in U.S. Patents 6,069,122 and 5,990,065; automatic dish detergent products are described in U.S. Patents 6,020,294, 6,017,871, 5,968,881, 5,962,386, 5,939,373, 5,914,307, 5,902,781, 5,705,464, 5,703,034, 5,703,030, 5,679,630, 5,597,936, 5,581,005, 5,559,261, 4,515,705, 5,169,552, and 4,714,562. Liquid laundry detergents which can use the present invention include those systems described in U.S. Patents 5,929,022, 5,916,862, 5,731,278, 5,565,145, 5,470,507, 5,466,802, 5,460,752, 5,458,810, 5,458,809, 5,288,431,5,194,639, 4,968,451, 4,597,898, 4,561,998, 4,550,862, 4,537,707, 4,537,706, 4,515,705, 4,446,042, and 4,318,818. Shampoo and conditioners that can employ the present invention include those described in U.S. Patents 6,162,423, 5,968,286, 5,935,561, 5,932,203, 5,837,661, 5,776,443, 5,756,436, 5,661,118, 5,618,523, 5,275,755, 5,085,857, 4,673,568, 4,387,090 and 4,705,681. All of the above mentioned U.S. Patents.

The following are provided as specific embodiments of the present invention. Other modifications of this invention will be readily apparent to those skilled in the art, without departing from the scope of this invention. Upon review of the foregoing, numerous adaptations, modifications and alterations will occur to the reviewer. These adaptations, modifications, and alterations will all be within the spirit of the invention. Accordingly, reference should be made to the appended claims in order to ascertain the scope of the present invention.

As used herein all percentages are weight percent. IFF is meant to be understood as International Flavors & Fragrances Inc.

### Example A

The following fragrance composition was prepared:

| **Fragrance Component** | **C log₁₀P value** | **Molecular Weight** | **Parts By Weight** |
|---|---|---|---|
| Veramoss | 3.22 | 196.07 | 3.0 |
| geranyl anthranilate | 4.22 | 273.38 | 7.5 |
| α-irone | 3.82 | 206.33 | 6.3 |
| phenyl ethyl benzoate | 4.21 | 226.28 | 3.2 |
| d-limonene | 4.23 | 136.24 | 3.2 |
| cis-p-t-butylcyclohexyl acetate | 4.02 | 198.31 | 5.8 |
| Liverscone | 2.95 | 152.12 | 7.3 |
| hexyl cinnamic aldehyde | 4.90 | 216.33 | 12.6 |
| hexyl salicylate | 4.91 | 222.29 | 10.6 |

### Example B

The following fragrance composition was prepared:

| **Fragrance Component** | **C log₁₀P value** | **Molecular Weight** | **Parts By Weight** |
|---|---|---|---|
| linalyl acetate | 3.36 | 196.14 | 2.6 |
| benzyl acetate | 1.72 | 150.17 | 1.5 |
| styrallyl acetate | 2.05 | 164.08 | 6.3 |
| dihydro carvone | 2.41 | 226.28 | 4.2 |
| Hedione | 2.53 | 226.16 | 4.7 |
| cis-p-t-butylcyclohexyl acetate | 4.02 | 198.31 | 5.8 |
| Citronellal | 3.17 | 154.14 | 7.3 |
| hexyl cinnamic aldehyde | 4.90 | 216.33 | 2.4 |
| cis-jasmone | 3.55 | 164.25 | 9.5 |
| Geraniol | 2.75 | 154.26 | 3.8 |
| hexyl salicylate | 4.91 | 222.29 | 10.6 |

### Example C

The following fragrance composition was prepared:

| **Fragrance Component** | **C log₁₀P value** | **Molecular Weight** | **Parts By Weight** |
|---|---|---|---|
| cinnamic alcohol | 1.50 | 134.07 | 14.3 |
| methyl beta napthyl ketone | 2.00 | 170.07 | 14.3 |
| Terpineol | 2.70 | 154.13 | 14.3 |
| Dihydromycernol | 3.00 | 156.15 | 14.3 |
| Citronellol | 3.30 | 156.15 | 14.3 |
| Tetrahydromyrcenol | 3.50 | 158.17 | 14.3 |

### EXAMPLE 1

### Preparation of control and high stability fragrance-containing microcapsules (not according to the invention)

80 parts by weight of the fragrance of research fragrance oil was admixed with 20 parts by weight of NEOBEE-M5 solvent thereby forming a 'fragrance/solvent composition'. Three fragrance oils were used to demonstrate the effect of high stability microcapsules, where Example A fragrance has more hydrophobic characteristics whereas Example B fragrance has more hydrophilic characteristics and Fragrance C fragrance has the most hydrophilic characteristics. The uncoated capsules were prepared by creating a polymeric wall to encapsulate fragrance/solvent composition droplets. To make the capsule slurry, a copolymer of acrylamide and acrylic acid was first dispersed in water together with a methylated melamine-formaldehyde resin. These two components were allowed to react under acidic conditions. The fragrance/solvent composition was then added into the solution and droplets of the desired size were achieved by high shear homogenization.

For the control microcapsule slurry, curing of the polymeric layer around the fragrance/solvent composition droplets was carried out at 80°C. For the high stability microcapsule slurry A (HS-A microcapsules), curing of the polymeric layer around the fragrance/solvent composition droplets was at 90°C. For the high stability microcapsule slurry B (HS-B microcapsules), curing of the polymeric layer was at 120 °C under pressure. The resulting microcapsule slurry contained about 55% water and about 45% filled microcapsules (35% core consisting of 80% fragrance oil, and 20% NEOBEE M-5 and 10% microcapsule wall).

### EXAMPLE 2

### Preparation of fabric conditioner samples containing the control and high stability microcapsules (not according to the invention)

In this example, Example A fragrance oil was used for the neat fragrance, control microcapsules, and HS-A microcapsules. A un-fragranced model fabric conditioner contained approximately 24 weight % cationic quaternary surfactants was used. Both control microcapsules and HS-A microcapsules having shell walls composed of an acrylamide-acrylic acid co-polymer cross-linked with melamine-formaldehyde resin as described in Example 1 were mixed with the model fabric conditioner separately using an overhead agitator at 300 rpm until homogeneous. The finished fabric conditioner base contained 0.5 weight % encapsulated fragrance was used for washing experiment in Example 3 and leaching experiment in Example 4. A reference fabric conditioner base contained 0.5 weight % neat fragrance was also prepared. All three fabric conditioner samples were stored at refrigerated 4°C and 37°C for 7 weeks. Historical data have suggested that samples stored at 4°C performed equally to samples that were freshly prepared.

### EXAMPLE 3

### Sensory performance of the high stability microcapsules in the fabric conditioner (not according to the invention)

The fabric conditioner samples (30 grams per sample) referred to in Example 2, supra, were introduced into a Sears, Roebuck and Co. KENMORE (Trademark of Sears Brands LLC of Hoffman Estates, Illinois (U.S.A.) 60179) washing machine during the rinse cycle thereof to condition 22 hand towels weighing a total of approximately 2400 gm. The 4-week aged rinse conditioner samples that contain 0.5 weight % fragrance were used. After rinsing, each of the hand towels, weighing 110 grams each, was machine-dried for 1 hour followed by sensory evaluation of 8 randomly-selected towels. The 8 randomly-selected dry towels were thus evaluated by a panel of ten people using the Label Magnitude Scale (LMS) from 0 to 99, wherein: 3 = "barely detectable"; 7 = "weak", 16 = "moderate", and 32 = "strong". Sensory scores were recorded before and after each of the eight randomly-selected towels contained in a separate polyethylene bag was rubbed by hand. Each rubbing test took place employing 5 time intervals @ 2 seconds per time interval for a total rubbing time of 10 seconds

As will be observed from Table 1, set forth infra, the rinse conditioner containing the high stability HS-A microcapsules of the invention evolved an aroma having greater pre-rub and post-rub intensities than the rinse conditioner containing the control microcapsules. No significant difference was noted when comparing the post-rub aroma intensity of the HS-A capsules stored at 37°C with that of the control microcapsules stored at 4°C. The same trend of aroma intensity rating was observed when samples were stored at 37°C for up to 7 weeks. Thus, it was concluded that the high stability microcapsules of our invention, that is, microcapsule wall cured at 90°C, perform advantageously superior to the control microcapsules cured at 80°C by the sensory performance measurement.

**Table 1**

| Fragrance addition in fabric conditioner (4-week storage) | Storage Temperature | Pre-rub sensory intensity rating | Post-rub sensory intensity rating |
|---|---|---|---|
| Neat fragrance | 37 °C | 3.7 | 3.2 |
| Control microcapsules | 37 °C | 4.6 | 8.9 |
| HS-A microcapsules | 37 °C | 5.8 | 12.1 |
| Control microcapsules | 4 °C | 8.2 | 12.6 |

### EXAMPLE 4

### Fragrance leaching from the high stability microcapsules in the fabric conditioner (not according to the invention)

This example illustrates the benefit of high stability microcapsules over the control capsules using an analytical measurement via the filtration procedure disclosed in commonly assigned US Patent Application Serial No. 11/034,593. The same capsules-containing fabric conditioner samples in Example 3 were individually sampled after aging for 2 and 4 weeks. Samples were then transferred into a Whatman syringe filter with a 1.0 um pore size. The amount of fragrance leached out from microcapsules was measured by direct GC injection to determine the passive release of encapsulated fragrance from microcapsules into the fabric conditioner.

**Table 2**

| Fragrance addition in fabric conditioner | Storage temperature | % Fragrance leaching of total fragrance load (2-week storage) | % Fragrance leaching of total fragrance load (4-week storage) |
|---|---|---|---|
| Control microcapsules | 4 °C | 0 % | 3.4% |
| Control microcapsules | 37 °C | 23.4% | 35.3% |
| HS-A microcapsules | 37 °C | 8.5% | 15.3% |

It was found that fragrance leaching from the control microcapsules was not detectable (about 0 %) when capsules-containing fabric conditioner was stored at 4°C for 2 weeks. A significant increase of fragrance leaching was observed when the same control microcapsules containing-fabric conditioner was stored at 37° C, that is 23.4% leaching based on the total fragrance load. For the high stability HS-A microcapsules stored at the same condition, demonstrated a third less leaching only about one-third of the amount leaching was noted when compared to the control microcapsules (8.5% vs. 23.4%), which amounts to about 64% leaching stability improvement. In the same manner upon 4-week storage, HS-A microcapsules only showed 15.3% leaching as opposed to 35.3% leaching of the control microcapsules, which is about 57% leaching stability improvement. These findings were in agreement with the sensory data in Example 3 that the high stability microcapsules cured at 90°C do exhibit a better encapsulated fragrance protection over the 80°C cured control microcapsules from loss to enable the perceivable sensory performance benefit.

### EXAMPLE 5

### Fragrance leaching from the high stability microcapsules in the fabric conditioner (not according to the invention)

This example illustrates the benefit of high stability microcapsules with a cure temperature over 100°C, where Example B fragrance oil was used for the control microcapsules, HS-A microcapsules, and HS-B microcapsules. The HS-B microcapsules cured at 120°C referred in Example 1 was incorporated into a model fabric conditioner containing approximately 13 weight % cationic quaternary surfactants, along with the control and HS-A microcapsules as a reference. The method of preparing capsules-containing rinse conditioner was described in Example 2. In addition, the filtration method as in Example 4 was used to determine the passive release of encapsulated fragrance from microcapsules into the fabric conditioner upon 4-week storage at 37°C.

**Table 3**

| Fragrance addition in fabric conditioner | Storage temperature | % Fragrance leaching of total fragrance load (2-week storage) | % Fragrance leaching of total fragrance load (4-week storage) |
|---|---|---|---|
| Control microcapsules | 37 °C | 13.9 % | 26.3% |
| HS-A microcapsules | 37 °C | 8.1% | 20.4% |
| HS-B microcapsules | 37 °C | 8.7% | 10.6% |

After 2 weeks, the control microcapsules lost about 14% of its contents, whereas the 90°C cured HS-A microcapsules and 120°C cured HS-B microcapsules only lost about 8%. After 4 weeks the benefit of the high stability HS-B microcapsules became more evident. It was observed that while HS-A microcapsules exhibited about 22% leaching stability improvement over the control microcapsules (20.4% vs. 26.3%), the HS-B microcapsules exhibited about 50% leaching stability improvement over the HS-A microcapsules (10.6% vs. 20.4%). These findings support the findings in Example 4 for building high stability high performance microcapsules with an increased cure temperature.

### EXAMPLE 6

### Performance of the high stability microcapsules on low Clog P encapsulated ingredients (not according to the invention)

This example illustrates the benefit of high stability microcapsules in retaining relative water soluble fragrance ingredients with Clog P below 3.0, where Example B fragrance oil was used for the control microcapsules and HS-A microcapsules. The high stability HS-A microcapsules cured at 90°C referred in Example 1 was incorporated into a model fabric conditioner containing approximately 13 weight % cationic quaternary surfactants along with the control microcapsules as a reference. The method of preparing capsules-containing rinse conditioner was described in Example 2. The leaching of three ingredients (Styrallyl acetate, Dihydro carvone, and Hedione) from microcapsules into the fabric conditioner upon 2 and 4 weeks storage at 37°C was determined via the filtration procedure as in Example 4.

**Table 4**

| Styrallyl acetate (Clog P = 2.05) | % Fragrance leaching of total fragrance load (0-week storage/fresh) | % Fragrance leaching of total fragrance load (2-week storage) | % Fragrance leaching of total fragrance load (4-week storage) |
|---|---|---|---|
| Control mirocapsules | 2.8% | 69.9% | 71.8% |
| HS-A microcapsules | 1.5% | 27.0% | 50.6% |

**Table 5**

| Dihydro carvone (Clog P = 2.41) | % Fragrance leaching of total fragrance load (0-week storage/fresh) | % Fragrance leaching of total fragrance load (2-week storage) | % Fragrance leaching of total fragrance load (4-week storage) |
|---|---|---|---|
| Control microcapsules | 1.7% | 62.7% | 79.0% |
| HS-A microcapsules | 2.5% | 8.5% | 22.7% |

**Table 6**

| Hedione (Clog P = 2.53) | % Fragrance leaching of total fragrance load (no storage/fresh) | % Fragrance leaching of total fragrance load (2-week storage) | % Fragrance leaching of total fragrance load (4-week storage) |
|---|---|---|---|
| Control microcapsules | 1.0% | 7.6% | 13.5% |
| HS-A microcapsules | 1.5% | 4.3% | 5.2% |

As shown in Tables 4, 5, and 6, high stability microcapsules showed a much superior protection of fragrance ingredients with Clog P below 3.0 upon 2 and 4 weeks storage in the rinse conditioner compared to the control microcapsules. The level of leaching stability improvement from the high stability microcapsules varied from about 43% to 86% at 2-week storage and about 30% to 71% at 4-week storage. These findings provide significant creation leverage for perfumers and formulators in using a wider range of ingredients with the high stability microcapsules than with the conventional microcapsules.

### EXAMPLE 7

### Fragrance leaching from the microcapsules with increased cure time (not according to the invention)

This example illustrates the benefit of microcapsules manufactured with increased cure time at the target cure temperature either at 80°C or 90°C. Both the control microcapsules cured at 80°C and the high stability HS-A microcapsules cured at 90°C referred in Example 1 was incorporated into a model fabric conditioner containing approximately 13% cationic quaternary surfactants. Three different cure time periods of 0, 1, and 2 hours were employed to demonstrate the increased cure time effect at a given cure temperature. The method of preparing capsules-containing rinse conditioner was described in Example 2. The amount of fragrance leaching from microcapsules into the fabric conditioner upon 2 and 4 weeks storage at 37°C was determined via the filtration procedure as in Example 4.

**Table 7**

| Fragrance addition in fabric conditioner | Microcapsule cure time (hour) | % Fragrance leaching of total fragrance load (2-week storage) | % Fragrance leaching of total fragrance load (4-week storage) |
|---|---|---|---|
| Control microcapsules | 1 hour | 23.4% | 35.3% |
| Control microcapsules | 2 hours | 13.9% | 25.0% |

**Table 8**

| Fragrance addition in fabric conditioner | Microcapsule cure time | % Fragrance leaching of total fragrance load (2-week storage) | % Fragrance leaching of total fragrance load (4-week storage) |
|---|---|---|---|
| HS-A microcapsules | 0 hour (no curing) | 12.9% | 18.8% |
| HS-A microcapsules | 1 hour | 8.5% | 15.3% |

As shown in Tables 7 and 8, microcapsules exhibited a better leaching protection with an additional one hour cure time, from 35% to 40% leaching stability improvement at 2-week storage and from 20% to 30% improvement at 4-week storage. Though a 2-hour cure time was employed for the control microcapsules cured at 80°C, the leaching stability, however, was still inferior to the high stability microcapsules cured at 90°C for 0 hour (no curing). The lowest leaching of 8.5% at 2-week storage and 15.3% at the 4-week storage suggested beyond dispute that the creation of high stability microcapsules can be achieved by the synergism of increased cure temperature and cure time of the present invention.

### EXAMPLE 8

### Fragrance leaching from the high stability microcapsules in the fabric conditioner (not according to the invention)

This example illustrates the benefit of high stability microcapsules with a cure temperature above 105°C, where Example C fragrance oil was used. Microcapsules prepared according to Example 1 were cured at 80°C, 105°C, 120°C, and 135°C and incorporated into a model fabric conditioner containing approximately 13 weight % cationic quaternary surfactants as described in Example 2. The filtration method described in Example 4 was used to determine the passive release of encapsulated fragrance from microcapsules into the fabric conditioner upon 2-week storage at 37°C.

**Table 9**

| Cure temperature (°C) | % Leaching of terpineol | % Leaching of dihydromyrcenol | % Leaching of tetrahydromyrcenol |
|---|---|---|---|
| 80 | 100.0% | 99.4% | 81.6% |
| 105 | 68.1% | 33.3% | 24.5% |
| 120 | 31.9% | 0.0% | 0.0% |
| 135 | 42.0% | 0.0% | 0.0% |

The data in Table 9 suggests that raising the cure temperature from 80°C to 105°C does significantly minimize leaching. A more drastic effect is realized when the cure temperature was increased from 105°C to 120°C. In this example no additional benefit is realized by further increasing the curing temperature from 120°C to 135°C. However at longer storage time, 4 weeks and beyond, the benefit of curing at 135°C becomes apparent.

### EXAMLE 9

### Fragrance leaching from the high stability microcapsules in the fabric conditioner (not according to the invention)

This example illustrates the benefit of high stability microcapsules with a cure temperature above 120°C, where Example B fragrance oil was used. Microcapsules prepared according to Example 1 were cured at 120°C and 135°C and incorporated separately into two model fabric conditioners containing approximately 13 weight % and 24 weight % cationic quaternary surfactants as described in Example 2. Fabric conditioner samples containing microcapsules were stored at 37°C for 8 weeks prior to the use for sensory performance evaluation as described in Example 3.

**Table 10**

| Microcapsule cure temperature (°C) | % surfactant in model rinse conditioner | Pre-rub sensory intensity rating | Post-rub sensory intensity rating |
|---|---|---|---|
| 120 | 24% | 12.0 | 20.5 |
| 135 | 24% | 16.7 | 24.0 |
| 120 | 13% | 15.5 | 18.9 |
| 135 | 13% | 18.8 | 21.2 |

Data in Table 10 shows that for both rinse conditioner bases samples containing approximately 13% and 24% surfactants, aroma evolved from high stability microcapsules cured at 135°C was greater than those cured at 120°C. This was true for both pre-rub and post-rub sensory intensity ratings, suggesting that raising the cure temperature of microcapsules above 120°C had an advantageous performance benefit especially for a prolonged storage, e.g. 8 weeks at 37°C, in rinse conditioner.

### EXAMPLE 10

### Fragrance leaching from the high stability microcapsules prepared with varied cure times in the fabric conditioner (not according to the invention)

This example further illustrates the benefit of high stability microcapsules cured at 120°C with an increased cure time. The fragrance oil of Example C was used. The microcapsules prepared according to Example 1 were cured at 120°C for 1 minute, 2 minutes, 5 minutes, 10 minutes, 20 minutes, and 60 minutes and were incorporated into a model fabric conditioner containing approximately 13 weight % cationic quaternary surfactants as described in Example 2. The filtration method described in Example 4 was used to determine the passive release of encapsulated fragrance from microcapsules into the fabric conditioner upon 2-week storage at 37°C. Data in Table 11 indicated that cure times of 2 minutes or longer at 120°C enhanced the leaching resistance of fragrance ingredients from the microcapsules.

**Table 11**

| Cure time (minutes) | % Leaching of methyl beta napthyl ketone | % Leaching of terpineol | % Leaching of citronellol | % Leaching of tetra-hydromyrcenol |
|---|---|---|---|---|
| 1 | 83.8% | 100.0% | 21.2% | 0.0% |
| 2 | 76.9% | 92.6% | 18.2% | 0.0% |
| 5 | 63.5% | 74.7% | 0.0% | 0.0% |
| 10 | 36.3% | 44.4% | 0.0% | 0.0% |
| 20 | 39.3% | 47.3% | 0.0% | 0.0% |
| 60 | 23.1% | 31.9% | 0.0% | 0.0% |

### EXAMPLE 11

### Fragrance leaching from the high stability microcapsules prepared with varied heating rates in the fabric conditioner (not according to the invention)

This example illustrates the benefit of a fast heating rate during the heating ramp from ambient temperature to the cure temperature of 120°C for high stability microcapsules, where Example C fragrance oil was used. The microcapsules prepared according to Example 1 were cured with heating rates of 0.3°C per minute (very slow), 1.7°C per minute (slow), and 11.1°C per minute (very fast) to 120°C, followed by a 1-hour cure, and were incorporated into a model fabric conditioner containing approximately 13 weight % cationic quaternary surfactants as described in Example 2. The heating profiles above mentioned are shown graphically in Figure 1 below. The filtration method described in Example 4 was used to determine the passive release of encapsulated fragrance from microcapsules into the fabric conditioner upon 2-week storage at 37°C.

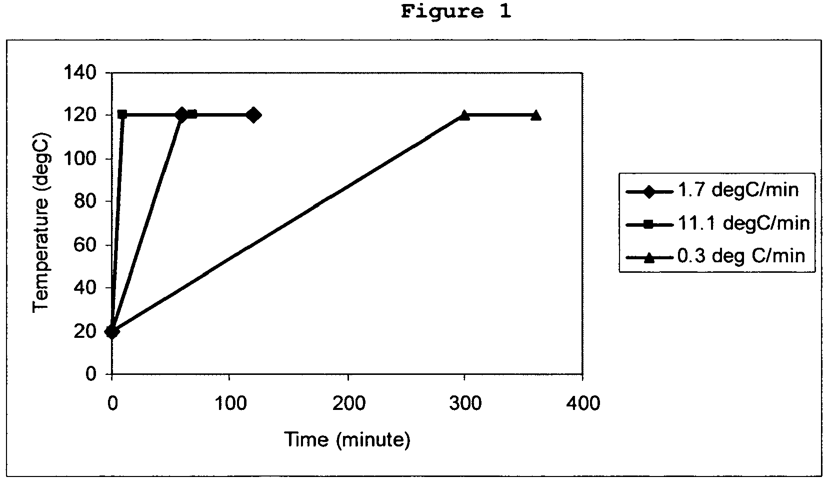

| Heating Rate (°C per minute) | % Leaching of methyl beta napthyl ketone | % Leaching of terpineol | % Leaching of di-hydromyrcen ol | % Leaching of tetra-hydromyrcen ol |
|---|---|---|---|---|
| 0.3 | 43.9% | 18.6% | 17.1% | 16.9% |
| 1.7 | 48.4% | 40.2% | 0.0% | 0.0% |
| 11.1 | 23.1% | 31.9% | 0.0% | 0.0% |

As shown in Table 12, the slowest heating rate of 0.3°C/minute was detrimental to leakage. This was evidenced by this microcapsule variant leaking each of its encapsulated components to a certain degree (between 16.9% and 43.9%) whereas the other two microcapsules heated with faster rates did not leak some of those components at all (i.e. 0%). The 2-week leach data showed that the faster heating rate results in high stability microcapsules with less leakage.

### EXAMPLE 12

### Fragrance leaching from the high stability microcapsules prepared with varied heating/curing patterns in the fabric conditioner (not according to the invention)

This example illustrates the disadvantage of the use of a cyclic heating pattern during the heating ramp from ambient temperature to the cure temperature of 120°C and cyclic pattern during curing for high stability microcapsules, where Example C fragrance oil was used.

The first heating pattern was shown in Figure 2, where this alternate cycling method employs an increasing minimum temperature for each subsequent cycle to mimic using a heat exchanger to raise the temperature of the reaction to a desired target cure temperature. Specifically, microcapsules prepared according to Example 1 were heated from ambient temperature to 120°C and then cooled to 80°C and immediately reheated to 120°C, followed by cooling to 90°C. This was repeated, increasing the lower temperature by 10°C at a time until 120°C was reached. This was redone incorporating an additional 60 minute cure at 120°C as an additional variant. Microcapsules were then incorporated into a model fabric conditioner containing approximately 13 weight % cationic quaternary surfactants described in Example 2. The filtration method described in Example 4 was used to determine the passive release of encapsulated fragrance from microcapsules into the fabric conditioner upon 3-day storage at 37°C.

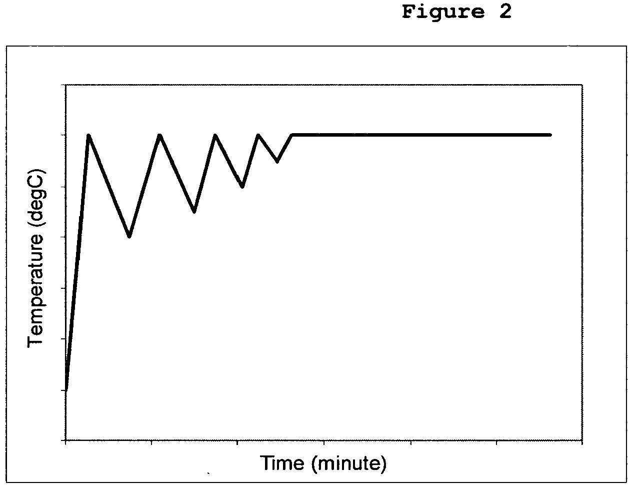

**Table 13**

| Heating pattern | % Leaching of cinnamic alcohol | % Leaching of methyl beta napthyl ketone | % Leaching of terpineol | % Leaching of di-hydromyrc enol | % Leaching of citronell ol |
|---|---|---|---|---|---|
| 60-minute linear heating to 120°C, followed by 1-hour cure | 46.2% | 11.1% | 6.4% | 0.0% | 0.0% |
| Cyclic heating to 120°C, no cure | 100.0% | 70.1% | 52.5% | 44.8% | 31.1% |
| Cyclic heating to 120°C, followed by 1-hour cure | 100.0% | 54.1% | 42.0% | 34.8% | 23.4% |

As shown in Table 13, the stepped cyclic heating profile was detrimental to leaching when compared to microcapsules that were heated via a linear profile. Adding an additional 1-hour cure at 120°C after the stepped cycling profile does reduce leakage when compared to the profile without it.

The second heating pattern is shown in Figure 3, where it mimics cycling through a heat exchanger with rapid heating and subsequent cooling, followed by another heating/cooling cycle, etc. as an alternate means for curing. Specifically, microcapsules prepared according to Example 1 were heated from ambient temperature to the cure temperature of 135°C and held for 2 minutes. They were then cooled to 80°C and immediately reheated to 135°C, etc. One cycle is then considered heating to 135°C followed by a 2-minute curing and then cooling to 80°C. The cycle was repeated four times, with microcapsule samples taken at the end of each cycle. Each sample was then incorporated into a model fabric conditioner containing approximately 13 weight % cationic quaternary surfactants. The filtration method described in Example 4 was used to determine the passive release of encapsulated fragrance from microcapsules into the fabric conditioner upon 2-week storage at 37°C.

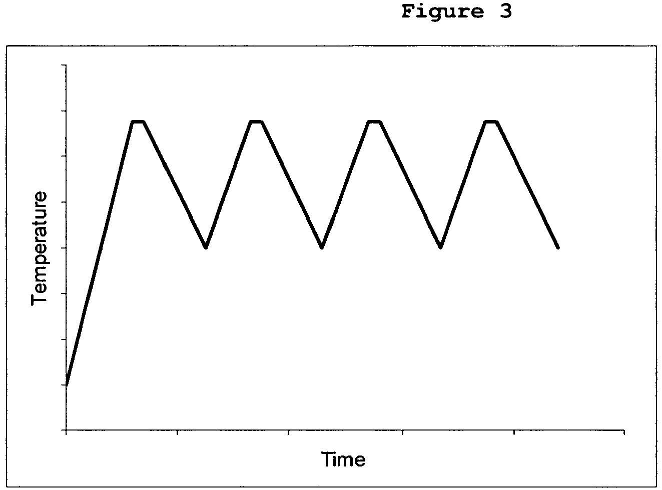

**Table 14**

| Number of heating cycles/ total cure | % Leaching of methyl beta napthyl ketone | % Leaching of terpineol | % Leaching of di-hydromyrce nol | % Leaching of tetra-hydromyrce nol |
|---|---|---|---|---|
| time (minutes) at 135°C | | | | |
| 1 (2 minutes) | 93.0% | 40.8% | 37.5% | 25.4% |
| 2 (4 minutes) | 83.3% | 26.5% | 24.4% | 18.8% |
| 3 (6 minutes) | 78.9% | 25.1% | 23.4% | 18.6% |
| 4 (8 minutes) | 69.7% | 22.2% | 21.0% | 16.8% |
| 0 (10 minutes) | 68.3% | 0.0% | 0.0% | 0.0% |

As shown in Table 14, data suggested that there is a slight improvement in leaching with each subsequent cycle. However, these % leaching values were far greater than the leaching values obtained from high stability microcapsules that were cured for 10 minutes at 135°C without cycling.

### EXAMPLE 13

### Fragrance leaching from the high stability microcapsules in the antiperspirant and deodorant roll-on base (not according to the invention)

This example illustrates the benefit of high stability microcapsules in consumer leave-on products, specifically in an antiperspirant/deodorant roll-on base, where an IFF commercial fragrance was used for encapsulation. High stability microcapsules prepared according to Example 1 were cured at 90°C and 120°C for 1 hour and incorporated into a model antiperspirant/ deodorant roll-on base comprising approximately 5% anionic surfactants and approximately 15% aluminum salt. The base containing these microcapsules was then aged at 45°C for 5 days. Samples were taken immediately after capsules were incorporated in the product base (time 0), 1 day, and 5 days, followed by hexane extraction and GC analysis to determine the % leaching of encapsulated fragrance from microcapsules.

**Table 15**

| Cure temperature (°C) | % Fragrance leaching at time-0 | % Fragrance leaching at Day-1 | % Fragrance leaching at Day-5 |
|---|---|---|---|
| 90 | 9.2% | 14.3% | 25.9% |
| 120 | 5.0% | 5.0% | 5.1% |

Data in Table 15 shows that the fragrance leaching for the 90°C cured microcapsules is increasing over time, whereas for the 120°C cured microcapsules the leaching has virtually stopped at about 5.0% and remains constant over time.

### EXAMPLE 14

### Fragrance leaching from the high stability microcapsules with modified wall network in the fabric conditioner (not according to the invention)

This example illustrates the benefit of modified crosslink network by changing the mole ratio of melamine-formaldehyde: acrylamide-acrylic acid copolymer in high stability microcapsules. Microcapsules using a half-fold (0.5X) of methylated melamine-formaldehyde resin prepared according to Example 1 were cured at 120°C for 10 minutes and 60 minutes respectively, where Example A fragrance oil was used. Microcapsules of both the reference made of 1.0X melamine-formaldehyde and the ones made of 0.5X melamine-formaldehyde were incorporated into a model fabric conditioner containing approximately 13 weight % cationic quaternary surfactants as described in Example 2. Fabric conditioner samples containing microcapsules were stored at 37°C for 4 weeks and 8 weeks prior to the use for sensory performance evaluation as described in Example 3. Only post-rub sensory intensities were reported in Table 16.

**Table 16**

| melamine-formaldehyde in the crosslinked network | 4-week intensity rating, 10-minute cured capsules | 4-week intensity rating, 60-minute cured capsules | 8-week intensity rating, 10-minute cured capsules | 8-week intensity rating, 60-minute cured capsules |
|---|---|---|---|---|
| 1.0X (reference) | 12.7 | 15.8 | 8.3 | 9.9 |
| 0.5X | 14.9 | 16.6 | 9.6 | 15.7 |

Data in Table 16 reveals that less crosslinked high stability microcapsules using 0.5X methylated melamine-formaldehyde performed better than more crosslinked microcapsules, both in the 4-week and 8-week sensory performance testing. Data also further reinforces a longer cure time of 60 minutes is more preferable to the shorter cure time of 10 minutes for high stability microcapsules with respect to their sensory performance in rinse conditioner upon aging.

## Claims

1. A process for preparing a high stability microcapsule product which comprises curing at a temperature above 90°C a crosslinked network of polymers containing an active material which is a fragrance to provide a microcapsule product which is capable of retaining the fragrance in consumer products, the consumer products comprising surfactants, alcohols, volatile silicones and mixtures thereof,
the process comprising the steps of:
- reacting polymers to form said crosslinked network of polymers;
- admixing said active material and an optional functional additive to the reactant mixture;
- encapsulating the active material with the crosslinked network of polymers to form a polymer encapsulated material;
- curing the polymer encapsulated material at a temperature greater than 90°C to provide a high stability microcapsule product,
wherein the heating profile to the target cure temperature of the crosslinked network of polymers containing the active material is linear with a heating rate of at least 2.0°C a minute, over a period of time less than sixty minutes,
and wherein said crosslinked network of polymers containing said active material is cured for a period of time longer than 1 hour.

2. The process of Claim 1 wherein the consumer product comprises surfactants.

3. The process of Claim 1 wherein the crosslinked network of polymers containing an active material is cured for greater than 2 hours.

4. The process of Claim 1 wherein the crosslinked network of polymers containing an active material is cured at a temperature above 110°C.

5. The process of Claim 1 wherein the crosslinked network of polymers containing an active material is cured at a temperature above 120°C.

6. The process of Claim 1 wherein the heating profile to the target cure temperature of the crosslinked network of polymers containing the active material is linear with a heating rate of at least 5.0°C a minute over a period of time less than sixty minutes.

7. The process of Claim 1 wherein the active material is a liquid thereby providing a liquid core to the microcapsule product.

8. The process of Claim 6 wherein the heating profile to the target cure temperature of the crosslinked network of polymers containing the active material is linear with a heating rate of at least 5.0°C a minute over a period of time less than thirty minutes.

9. The process of Claim 1 wherein the fragrance components has a clogP less than 4.0.

10. The process of Claim 1 wherein the fragrance has a clog P less than 3.0.

11. The process of Claim 1 wherein the microcapsule product is further coated by a cationic polymer.

12. The process of Claim 9, 10 or 11 wherein the microcapsule product retains greater than 40% of the fragrance after a four week period in a surfactant containing consumer products.

13. The process of Claim 1 wherein the encapsulating polymer is selected from a vinyl polymer, an acrylate polymer, melamine-formaldehyde, urea formaldehyde, amine-containing polymer, amine-generating polymer, aminoplasts, and mixtures thereof.

14. The process of Claim 11 wherein the cationic polymer is selected from polysaccharides, cationically modified starch and cationically modified guar, polysiloxanes, poly diallyl dimethyl ammonium halides, copolymers of poly diallyl dimethyl ammonium chloride and vinyl pyrrolidone, acrylamides, imidazoles, imidazolinium halides, imidazolium halides and mixtures.

15. The process of Claim 14 wherein the cationic polymer is selected from a cationically modified starch, cationically modified guar and mixtures thereof.

16. The process of Claim 1, wherein the microcapsule product is provided in the form of a consumer product comprising said microcapsule product.

## Patentansprüche

1. Verfahren zur Herstellung eines hochstabilen Mikrokapselprodukts, bei dem man ein vernetztes Netzwerk von Polymeren, die einen Wirkstoff, bei dem es sich um einen Duftstoff handelt, enthalten, bei einer Temperatur von oberhalb 90°C aushärtet, um zu einem Mikrokapselprodukt zu gelangen, das fähig ist, den Duftstoff in Konsumprodukten beizubehalten, wobei die Konsumprodukte Tenside, Alkohole, flüchtige Silikone und Mischungen davon umfassen,
wobei das Verfahren die folgenden Schritte umfasst:
- Umsetzen von Polymeren, um das vernetzte Netzwerk von Polymeren zu bilden;
- Zumischen des Wirkstoffs und eines optionalen funktionellen Zusatzstoffs zu der Reaktantenmischung;
- Verkapseln des Wirkstoffs mit dem vernetzten Netzwerk von Polymeren unter Bildung eines polymerverkapselten Materials;
- Aushärten des polymerverkapselten Materials bei einer Temperatur von mehr als 90°C, um zu einem hochstabilen Mikrokapselprodukt zu gelangen,
wobei das Erhitzungsprofil auf die Zielaushärtungstemperatur des vernetzten Netzwerks von Polymeren, das den Wirkstoff enthält, über einen Zeitraum von weniger als sechzig Minuten linear mit einer Erhitzungsrate von mindestens 2,0°C pro Minute ist,
und wobei das vernetzte Netzwerk von Polymeren, das den Wirkstoff enthält, für einen Zeitraum, der länger als 1 Stunde ist, ausgehärtet wird.

2. Verfahren nach Anspruch 1, wobei das Konsumprodukt Tenside umfasst.

3. Verfahren nach Anspruch 1, wobei das vernetzte Netzwerk von Polymeren, das einen Wirkstoff enthält, länger als 2 Stunden ausgehärtet wird.

4. Verfahren nach Anspruch 1, wobei das vernetzte Netzwerk von Polymeren, das einen Wirkstoff enthält, bei einer Temperatur von über 110°C ausgehärtet wird.

5. Verfahren nach Anspruch 1, wobei das vernetzte Netzwerk von Polymeren, das einen Wirkstoff enthält, bei einer Temperatur von über 120°C ausgehärtet wird.

6. Verfahren nach Anspruch 1, wobei das Erhitzungsprofil auf die Zielaushärtungstemperatur des vernetzten Netzwerks von Polymeren, das den Wirkstoff enthält, über einen Zeitraum von weniger als sechzig Minuten linear mit einer Erhitzungsrate von mindestens 5,0°C pro Minute ist.

7. Verfahren nach Anspruch 1, wobei es sich bei dem Wirkstoff um eine Flüssigkeit handelt, wodurch dem Mikrokapselprodukt ein flüssiger Kern bereitgestellt wird.

8. Verfahren nach Anspruch 6, wobei das Erhitzungsprofil auf die Zielaushärtungstemperatur des vernetzten Netzwerks von Polymeren, das den Wirkstoff enthält, über einen Zeitraum von weniger als dreißig Minuten linear mit einer Erhitzungsrate von mindestens 5,0°C pro Minute ist.

9. Verfahren nach Anspruch 1, wobei die Duftstoffkomponenten einen clogP-Wert von weniger als 4,0 aufweist.

10. Verfahren nach Anspruch 1, wobei der Duftstoff einen clogP-Wert von weniger als 3,0 aufweist.

11. Verfahren nach Anspruch 1, wobei das Mikrokapselprodukt weiter mit einem kationischen Polymer beschichtet ist.

12. Verfahren nach Anspruch 9, 10 oder 11, wobei das Mikrokapselprodukt nach einem vierwöchigen Zeitraum in einem tensidhaltigen Konsumprodukten mehr als 40% des Duftstoffs beibehält.

13. Verfahren nach Anspruch 1, wobei das verkapselnde Polymer aus einem Vinylpolymer, einem Acrylatpolymer, Melamin-Formaldehyd, Harnstoff-Formaldehyd, aminhaltigem Polymer, aminerzeugendem Polymer, Aminoplasten und Mischungen davon ausgewählt ist.

14. Verfahren nach Anspruch 11, wobei das kationische Polymer aus Polysacchariden, kationisch modifizierter Stärke und kationisch modifiziertem Guar, Polysiloxanen, Polydiallyldimethylammoniumhalogeniden, Copolymeren von Polydiallyldimethylammoniumchlorid und Vinylpyrrolidon, Acrylamiden, Imidazolen, Imidazoliniumhalogeniden, Imidazoliumhalogeniden und Mischungen ausgewählt ist.

15. Verfahren nach Anspruch 14, wobei das kationische Polymer aus einer kationisch modifizierten Stärke, einem kationisch modifizierten Guar und Mischungen davon ausgewählt ist.

16. Verfahren nach Anspruch 1, wobei das Mikrokapselprodukt in Form eines Konsumprodukts, das das Mikrokapselprodukt umfasst, bereitgestellt wird.

## Revendications

1. Procédé de préparation d'un produit en microcapsules de grande stabilité qui comprend le durcissement à une température supérieure à 90 °C d'un réseau réticulé de polymères contenant un matériau actif qui est une fragrance pour obtenir un produit en microcapsules qui est susceptible de conserver la fragrance dans des produits de consommation, les produits de consommation comprenant des tensioactifs, des alcools, des silicones volatiles et des mélanges de ceux-ci,
le procédé comprenant les étapes consistant à :
- faire réagir des polymères pour former ledit réseau réticulé de polymères ;
- mélanger ledit matériau actif et un additif fonctionnel facultatif au mélange de réactifs ;
- encapsuler le matériau actif avec le réseau réticulé de polymères pour former un matériau encapsulé par polymère ;
- durcir le matériau encapsulé par polymère à une température supérieure à 90 °C pour obtenir un produit en microcapsules de grande stabilité,
dans lequel le profil de chauffage jusqu'à la température de durcissement cible du réseau réticulé de polymères contenant le matériau actif est linéaire avec une vitesse de chauffage d'au moins 2,0 °C par minute, sur une durée inférieure à soixante minutes,
et dans lequel ledit réseau réticulé de polymères contenant ledit matériau actif est durci pendant une durée dépassant 1 heure.

2. Procédé de la revendication 1 dans lequel le produit de consommation comprend des tensioactifs.

3. Procédé de la revendication 1 dans lequel le réseau réticulé de polymères contenant un matériau actif est durci pendant plus de 2 heures.

4. Procédé de la revendication 1 dans lequel le réseau réticulé de polymères contenant un matériau actif est durci à une température supérieure à 110 °C.

5. Procédé de la revendication 1 dans lequel le réseau réticulé de polymères contenant un matériau actif est durci à une température supérieure à 120 °C.

6. Procédé de la revendication 1 dans lequel le profil de chauffage jusqu'à la température de durcissement cible du réseau réticulé de polymères contenant le matériau actif est linéaire avec une vitesse de chauffage d'au moins 5,0 °C par minute sur une durée inférieure à soixante minutes.

7. Procédé de la revendication 1 dans lequel le matériau actif est un liquide fournissant ainsi un noyau liquide au produit en microcapsules.

8. Procédé de la revendication 6 dans lequel le profil de chauffage jusqu'à la température de durcissement cible du réseau réticulé de polymères contenant le matériau actif est linéaire avec une vitesse de chauffage d'au moins 5,0 °C par minute sur une durée inférieure à trente minutes.

9. Procédé de la revendication 1 dans lequel les constituants de la fragrance a un clogP inférieur à 4,0.

10. Procédé de la revendication 1 dans lequel la fragrance a un clogP inférieur à 3,0.

11. Procédé de la revendication 1 dans lequel le produit en microcapsules est en outre enrobé d'un polymère cationique.

12. Procédé de la revendication 9, 10 ou 11 dans lequel le produit en microcapsules conserve plus de 40 % de la fragrance après une période de quatre semaines dans un produits de consommation contenant un tensioactif.

13. Procédé de la revendication 1 dans lequel le polymère d'encapsulation est choisi parmi un polymère vinylique, un polymère d'acrylate, la mélamine-formaldéhyde, l'urée-formaldéhyde, un polymère contenant une amine, un polymère générant une amine, les aminoplastes, et les mélanges de ceux-ci.

14. Procédé de la revendication 11 dans lequel le polymère cationique est choisi parmi les polysaccharides, l'amidon modifié cationiquement et la gomme de guar modifiée cationiquement, les polysiloxanes, les halogénures de polydiallyldiméthylammonium, les copolymères de chlorure de polydiallyldiméthylammonium et de vinylpyrrolidone, les acrylamides, les imidazoles, les halogénures d'imidazolinium, les halogénures d'imidazolium et les mélanges.

15. Procédé de la revendication 14 dans lequel le polymère cationique est choisi parmi un amidon modifié cationiquement, une gomme de guar modifiée cationiquement et les mélanges de ceux-ci.

16. Procédé de la revendication 1, dans lequel le produit en microcapsules est obtenu sous la forme d'un produit de consommation comprenant ledit produit en microcapsules.
